# EUROPÄISCHE PATENTSCHRIFT

(11) **EP 3 545 390 B1**
(45) Veröffentlichungstag und Bekanntmachung des Hinweises auf die Patenterteilung: **30.12.2020**
(21) Anmeldenummer: 17822116.4
(22) Anmeldetag: 22.11.2017
(51) Int. Cl.: G06F 3/0362

(54) **BEDIENELEMENT FÜR EINE ELEKTRISCH GESTEUERTE MASCHINE, SOWIE EIN VERFAHREN ZUR EINGABE EINES BEFEHLS IN DIE STEUERUNG DER ELEKTRISCH GESTEUERTEN MASCHINE**
OPERATING ELEMENT FOR AN ELECTRICALLY CONTROLLED MACHINE, AND METHOD FOR INPUTTING A COMMAND INTO THE CONTROLLER OF THE ELECTRICALLY CONTROLLED MACHINE
ÉLÉMENT DE COMMANDE POUR UNE MACHINE À COMMANDE ÉLECTRIQUE ET PROCÉDÉ POUR ENTRER UNE INSTRUCTION DANS LA COMMANDE DE CETTE MACHINE À COMMANDE ÉLECTRIQUE

(30) Priorität: 23.11.2016 AT 510632016
(43) Veröffentlichungstag der Anmeldung: 02.10.2019
(73) Patentinhaber: KEBA AG, 4041 Linz (AT)
(72) Erfinder: FISCHER, Harald, 5323 Ebenau (AT); WEILGUNY, Günther, 4030 Linz (AT)
(74) Vertreter: Burger, Hannes
(86) Internationale Anmeldenummer: PCT/AT2017/060310
(87) Internationale Veröffentlichungsnummer: WO 2018/094436

(56) Entgegenhaltungen:
- DE-A1- 19 936 257
- DE-A1-102004 019 893
- US-A1- 2011 025 652
- US-A1- 2014 267 039

## Beschreibung

Die Erfindung betrifft ein Bedienelement für eine elektrisch gesteuerte Maschine, sowie ein Verfahren zur Eingabe eines Befehls in die Steuerung der elektrisch gesteuerten Maschine.

Aus der AT 512 521 B1 ist eine Bedieneinheit für eine Spritzgießmaschine bekannt. Die Bedieneinheit weist ein Bedienelement zum Auslösen zumindest einer Bewegung einer Antriebseinheit der Spritzgießmaschine auf, wobei das Bedienelement von einer Grundstellung in einen die Bewegung der Antriebseinheit auslösenden Auslösebereich bewegbar ist. Der Auslösebereich weist eine Vielzahl von Zwischenstellungen zwischen der Grundstellung und einer Maximalstellung auf. Die Geschwindigkeit der ausgelösten Bewegung der Antriebseinheit ist abhängig von der Entfernung der gewählten Zwischenstellung des Bedienelements von der Grundstellung. Durch das Bedienelement sind Bewegungen mehrerer Antriebseinheiten auslösbar, wobei durch Drücken, Ziehen, Schwenken usw. des Bedienelements ein Wechsel der durch das Bedienelement angesteuerten Antriebseinheiten erfolgt.

Die aus der AT 512 521 B1 bekannte Bedieneinheit weist den Nachteil auf, dass ein Bedienelement, welches Befehle durch Drücken, Ziehen, Schwenken usw. ausführt eine entsprechende mechanische Kopplung zu einem Schalter aufweisen muss. Eine derartige Kopplung ist fehleranfällig und teuer. Darüber hinaus ist eine derartige Kopplung beispielsweise in explosionsgeschützten Bereichen schwierig zu realisieren.

Die DE 19936257 A1 offenbart einen Mehrfachdrehknopf zur An- und Auswahl aus dem Funktionsangebot eines technischen Systems. Der Mehrfachdrehknopf weist dabei mehrere berührungssensitive Drehknöpfe bzw. mehrere, durch stufenförmige Übergänge getrennte Zonen, auf. Die Einzeldrehknöpfe bzw. Zonen sind konzentrisch in verschiedenen Radien von der Drehachse ausgebildet. Die Auswahl einer Funktion erfolgt über die Rotation eines oder mehrerer Drehknöpfe und die Bestätigung erfordert die Ausübung einer Kraft in Radial- und/oder Axialrichtung auf den Mehrfachdrehknopf.

Die US 2014/267039 A1 offenbart einen Drehknopf, welcher ringförmig um die Drehachse angeordnete elektrisch leitfähige und mechanisch deformierbare Sensorbereiche aufweist. Die Sensorbereiche sind hinter einer deformierbaren elektrisch isolierenden Zone angeordnet. Zur Auswahl und/oder Bestätigung einer Funktion ist eine physikalische Kraft in Radial- und/oder Axialrichtung erforderlich, welche eine Kapazitätsänderung der Sensorelemente bewirkt. Aufgabe der vorliegenden Erfindung war es, die Nachteile des Standes der Technik zu überwinden und ein verbessertes Bedienelement zur Verfügung zu stellen. Darüber hinaus war es die Aufgabe der Erfindung ein verbessertes Verfahren zur Eingabe eines Befehls in die Steuerung der elektrisch gesteuerten Maschine zur Verfügung zu stellen.

Diese Aufgabe wird durch ein Bedienelement und ein Verfahren gemäß den Ansprüchen gelöst.

Die Erfindung wird definiert durch ein Bedienelement gemäß Anspruch 1 und ein Verfahren zur Eingabe eines Befehls gemäß Anspruch 13.

Erfindungsgemäß ist ein Bedienelement für eine elektrisch gesteuerte Maschine, mit einem Bedienelementkörper und einem Drehrad zum Eingeben eines Befehls in eine Steuerung der Maschine ausgebildet, wobei das Drehrad um eine Rotationsachse drehbar am Bedienelementkörper angeordnet ist und die Rotationsachse von einer Mantelfläche umgeben ist, an welcher das Drehrad von einem Maschinenbediener ergreifbar und verdrehbar ist. An der Mantelfläche des Drehrades ist ein erster Sensorbereich ausgebildet, welcher von einem ersten Sensorelement erfasst ist, mittels welchem ersten Sensorelement eine Berührung des ersten Sensorbereiches durch den Maschinenbediener erfassbar ist. An der Mantelfläche des Drehrades ist ein vom ersten Sensorbereich beabstandeter Greifbereich ausgebildet.

Von Vorteil an der erfindungsgemäßen Ausbildung des Bedienelementes ist, dass mittels dem Bedienelement eine Vielzahl an verschiedenen Steuerbefehlen durchgeführt werden können, wobei das Bedienelement einen einfachen Aufbau aufweist. Darüber hinaus kann das Drehrad mittels einem einfachen Drehsensor am Bedienelementkörper angekoppelt sein und muss keine weitere Bewegung, beispielsweise drücken, ziehen oder schwenken des Drehrades relativ zum Bedienelementkörper detektiert werden. Somit kann das Drehrad relativ zum Bedienelementkörper einfach abgedichtet werden, um beispielsweise einen Staubeintritt zwischen Drehrad und Bedienelementkörper möglichst zu unterbinden. Darüber hinaus kann ein derartiger Drehsensor eine robuste Bauweise aufweisen.

Weiters sind der erste Sensorbereich und der Greifbereich axial zueinander beabstandet ausgebildet, wobei der erste Sensorbereich vollumfänglich an der Mantelfläche des Drehrades ausgebildet ist. Von Vorteil ist hierbei, dass der erste Sensorbereich zur Bestätigung von Eingabebefehlen dienen kann, wobei durch axiales Verschieben der Hand des Maschinenbedieners der Bestätigungsbefehl ausgelöst werden kann.

Ferner kann vorgesehen sein, dass an der Mantelfläche des Drehrades ein zweiter Sensorbereich ausgebildet ist, an welchem zumindest ein zweites Sensorelement angeordnet ist, wobei der erste Sensorbereich und der zweite Sensorbereich axial zueinander beabstandet am Drehrad angeordnet sind. Von Vorteil ist hierbei, dass durch Einsatz eines zweiten Sensorelementes in einem zweiten Sensorbereich eine weitere Bewegung bzw. Position der Hand des Maschinenbedieners erfasst werden kann und dadurch die Möglichkeiten zur Eingabe von Befehlen mit dem Drehrad weiter erhöht werden können.

Darüber hinaus ist vorgesehen, dass der erste Sensorbereich näher am Bedienelementkörper angeordnet ist als der Greifbereich. Von Vorteil ist hierbei, dass ein Bestätigungsbefehl durch Schieben der Hand des Maschinenbedieners zum Bedienelementkörper hin ausgeführt werden kann.

Vorteilhaft ist auch eine Ausprägung, gemäß welcher vorgesehen sein kann, dass der zweite Sensorbereich näher am Bedienelementkörper angeordnet ist als der erste Sensorbereich. Gemäß einer Weiterbildung ist es möglich, dass die Mantelfläche des Drehrades einen Absatz aufweist, wobei insbesondere der erste Sensorbereich oder der zweite Sensorbereich an einer Stirnseite am Absatz angeordnet sind. Von Vorteil ist hierbei, dass der Absatz als Anschlag für die Hand des Maschinenbedieners dienen kann und dadurch dem Maschinenbediener ein Feedback gegeben werden kann, in welcher Position sich seine Hand gerade befindet.

Ferner kann es zweckmäßig sein, wenn sich der erste Sensorbereich oder der zweite Sensorbereich von der Stirnseite des Absatzes bis in einen Umfangsbereich des Absatzes erstrecken. Von Vorteil ist hierbei, dass somit vom Sensor auch detektiert werden kann, wenn der Maschinenbediener den Absatz im Umfangsbereich greift und dadurch einen gesonderten Befehl ausführt.

Darüber hinaus kann vorgesehen sein, dass in einem Umfangsbereich des Absatzes ein dritter Sensorbereich mit zumindest einem dritten Sensorelement ausgebildet ist. Von Vorteil ist hierbei, dass eine Berührung des Umfangbereiches durch die Hand des Maschinenbedieners mittels dem dritten Sensorelement als eigenständiger Eingabebefehl erfasst werden kann und dem Maschinenbediener dadurch eine zusätzliche Befehlsmöglichkeit gegeben wird.

Weiters ist vorgesehen, dass im Greifbereich des Drehrades kein Sensorelement angeordnet ist. Von Vorteil ist hierbei, dass der Greifbereich zum Angreifen und Drehen des Drehrades dienen kann, wobei durch Abwesenheit der Hand des Maschinenbedieners an den restlichen Sensoren die Lage der Hand eindeutig zugeordnet werden kann und dabei kein zusätzlicher Sensor notwendig ist. Dies vereinfacht den Aufbau bzw. verringert die Fehleranfälligkeit des Drehkopfes.

Gemäß einer besonderen Ausprägung ist es möglich, dass das Drehrad in dessen Grundkontur rotationssymmetrisch, insbesondere zylinderförmig, ausgebildet ist und einen Durchmesser zwischen 20mm und 80mm, insbesondere zwischen 35mm und 60mm, bevorzugt zwischen 40mm und 50mm aufweist. Von Vorteil ist hierbei, dass ein derartig aufgebautes Drehrad vom Maschinenbediener einfach zu Handhaben ist. Durch eine zylinderförmige Ausbildung des Drehrades kann darüber hinaus erreicht werden, dass die Hand des Maschinenbedieners gut axial entlang dem Drehrad gleiten kann und somit die einzelnen Eingabebefehle gut gegeben werden können.

Entsprechend einer vorteilhaften Weiterbildung kann vorgesehen sein, dass das oder die Sensorelemente als kapazitative Sensoren ausgeführt sind. Von Vorteil ist hierbei, dass derartig ausgeführte Sensoren eine hohe Empfindlichkeit und somit eine gute Erkennbarkeit der Position der Hand des Maschinenbedieners aufweisen.

Alternativ dazu kann vorgesehen sein, dass das oder die Sensorelemente durch eine Leitfähigkeitsmessung realisiert werden. Dies kann insbesondere bei metallischen Drehrädern eine kostengünstige und robuste Ausführung sein.

Insbesondere kann es vorteilhaft sein, wenn das oder die Sensorelemente druckempfindlich ausgeführt sind und eine Größe einer Einwirkkraft einer Hand des Maschinenbedieners detektieren können. Von Vorteil ist hierbei, dass durch diese Maßnahme ein einwirkkraftabhängiger Befehl an die Steuerung der Maschine gegeben werden kann. Dies kann beispielsweise ein mehrstufiger Bestätigungsbefehl oder etwa eine Geschwindigkeitssteuerung und dergleichen sein.

Ferner kann vorgesehen sein, dass am Bedienelementkörper ein Anzeigedisplay und eine Drucktaste angeordnet sind. Von Vorteil ist hierbei, dass durch das Anzeigedisplay die ausgeführten Eingabebefehle bzw. die Auswahlmöglichkeiten dem Maschinenbediener visualisiert werden können. Durch die Drucktaste können zusätzliche Eingabebefehle ermöglicht werden. Insbesondere kann vorgesehen sein, dass das Anzeigedisplay als Touch-Display oder als Multi- Touch-Display ausgeführt ist. Dabei kann vorgesehen sein, dass die Drucktaste im Touch-Display oder im Multi- Touch-Display dargestellt bzw. realisiert ist.

Wird in den unteren Ausführungen von der Berührung des ersten Sensorbereiches gesprochen, so wird eine Berührung des ersten Sensorbereiches ohne gleichzeitiger Berührung des zweiten Sensorbereiches gemeint. Wird von einer Berührung des zweiten Sensorbereiches gesprochen, so wird eine Berührung des zweiten Sensorbereiches unter gleichzeitiger Berührung des ersten Sensorbereiches gemeint.

Weiters ist ein Verfahren zur Eingabe eines Befehls in die Steuerung der elektrisch gesteuerten Maschine unter Verwendung eines Bedienelementes Vorgesehen. Das Bedienelement weist vorzugsweise einen Bedienelementkörper und ein am Bedienelementkörper bezüglich einer Rotationsachse drehbar angeordnetes Drehrad auf, wobei das Drehrad einen Greifbereich und zumindest einen Sensorbereich aufweist. Das Verfahren umfasst die folgenden Verfahrensschritte:
- Greifen des Drehrades des Bedienelementes im Greifbereich oder in einem der Sensorbereiche mittels der Hand eines Maschinenbedieners;
- Eingeben von Selektionsbefehlen in die Steuerung der Maschine durch Drehen des Drehrades des Bedienelementes bezüglich seiner Rotationsachse;
- Eingeben von Auswahlbefehlen in die Steuerung der Maschine durch Axiales verschieben der Hand des Maschinenbedieners relativ zum Drehrad, sodass die Hand des Maschinenbedieners von einem der Sensorbereiche in einen anderen Sensorbereich oder vom Greifbereich in einen der Sensorbereiche oder von einem der Sensorbereiche in den Greifbereich gleitet, wobei dies vom jeweils betroffenen Sensorelement detektiert und dadurch der Bestätigungsbefehl eingegeben wird.

Von Vorteil am erfindungsgemäßen Verfahren ist, dass mit nur einem Drehrad mehrere Auswahlbefehle durch Drehen des Drehrades bzw. Bestätigungsbefehle durch axiales Verschieben der Hand des Maschinenbedieners in die Steuerung der elektrisch gesteuerten Maschine eingebbar sind. Dadurch wird eine intuitive und möglichst einfache und rasche Steuerung der Maschine durch den Maschinenbediener ermöglicht. Darüber hinaus kann das Bedienelement möglichst einfach aufgebaut sein und daher robust und wenig fehleranfällig sein. Auch die Zeitersparnis beim Bedienen der Maschine mittels dem Bedienelement hat sich als überraschend großer Vorteil herauskristallisiert. Durch die vereinfachte Bedienbarkeit der Maschine können auch unrichtige Befehlseingaben durch den Maschinenbediener weitestgehend vermieden werden.

Weiters können die unterhalb angeführten Verfahrensschritte vorteilhaft sein.

Vorteilhaft ist auch eine Ausprägung, gemäß welcher vorgesehen sein kann, dass zum Navigieren zwischen verschiedenen Menüpunkten das Drehrad des Bedienelementes nur in einem ersten Sensorbereich gegriffen wird und durch Drehen des Drehrades zwischen den verschiedenen Menüpunkten navigiert wird und durch axiales Verschieben der Hand des Maschinenbedieners vom ersten Sensorbereich in einen zweiten Sensorbereich ein Bestätigungsbefehl in die Steuerung der Maschine eingegeben wird und der angewählte Menüpunkt bestätigt und dadurch geöffnet wird. Beim axialen Verschieben der Hand des Maschinenbedieners kann einerseits vorgesehen sein, dass die komplette Hand des Maschinenbedieners verschoben wird, bis der zweite Sensorbereich von den Fingerkuppen berührt wird. Alternativ kann auch vorgesehen sein, dass nur einzelne Finger ausgestreckt bzw. nach vorne verschoben werden, bis die Fingerkuppen den zweiten Sensorbereich berühren. Insbesondere kann vorgesehen sein, dass beim Verschieben der Hand zur Durchführung des Bestätigungsbefehls sowohl der erste als auch der zweite Sensorbereich berührt werden.Gemäß einer Weiterbildung ist es möglich, dass zum Navigieren zwischen verschiedenen Menüpunkten das Drehrad des Bedienelementes im zweiten Sensorbereich gegriffen wird und durch Drehen des Drehrades zwischen den verschiedenen Menüpunkten navigiert wird und durch axiales Verschieben der Hand des Maschinenbedieners vom zweiten Sensorbereich in den ersten Sensorbereich oder durch Loslassen des Drehrades ein Bestätigungsbefehl in die Steuerung der Maschine eingegeben wird und der angewählte Menüpunkt bestätigt und dadurch geöffnet wird.

Ferner kann es zweckmäßig sein, wenn zum Einstellen eines Parameters in einer Auswahl einer Vielzahl von Parametern das Drehrad des Bedienelementes im ersten Sensorbereich gegriffen wird und durch Drehen des Drehrades zwischen den verschiedenen Parametern navigiert wird und durch axiales Verschieben der Hand des Maschinenbedieners vom ersten Sensorbereich in den zweiten Sensorbereich ein Bestätigungsbefehl in die Steuerung der Maschine eingegeben wird und der angewählte Parameter bestätigt und dadurch geöffnet und editierbar gemacht wird und dass anschließend die Hand des Maschinenbedieners wieder in den ersten Sensorbereich geführt wird und durch Drehen des Drehrades zwischen den einzelnen Ziffern des einzustellenden Parameters gewählt werden kann und abermals durch axiales Verschieben der Hand des Maschinenbedieners vom ersten Sensorbereich in den zweiten Sensorbereich ein Bestätigungsbefehl in die Steuerung der Maschine eingegeben wird und die angewählte Ziffer verstellbar wird und dass anschließend die Hand des Maschinenbedieners wieder in den ersten Sensorbereich geführt wird und durch Drehen des Drehrades der Wert der ausgewählten Ziffer gewählt werden kann und abermals durch axiales Verschieben der Hand des Maschinenbedieners vom ersten Sensorbereich in den zweiten Sensorbereich ein Bestätigungsbefehl in die Steuerung der Maschine eingegeben wird und der gewählte Wert der Ziffer bestätigt wird und eine neue Ziffer anwählbar ist.

Darüber hinaus kann vorgesehen sein, dass zum Einstellen eines Parameters in einer Auswahl einer Vielzahl von Parametern das Drehrad des Bedienelementes im ersten Sensorbereich gegriffen wird und durch Drehen des Drehrades zwischen den verschiedenen Parametern navigiert wird und durch axiales Verschieben der Hand des Maschinenbedieners vom ersten Sensorbereich in den zweiten Sensorbereich ein Bestätigungsbefehl in die Steuerung der Maschine eingegeben wird und der angewählte Parameter bestätigt und dadurch geöffnet und editierbar gemacht wird und dass durch Verdrehen des Drehrades unter gleichzeitigem Halten der Hand des Maschinenbedieners im zweiten Sensorbereich der komplette Parameterwert unter Einbezug all seiner Ziffern verstellt wird und dass durch Loslassen des Drehrades oder durch axiales Verschieben der Hand des Maschinenbedieners vom zweiten Sensorbereich in den ersten Sensorbereich der eingestellte Parameterwert bestätigt wird.

Weiters kann vorgesehen sein, dass zum Auswählen einer Verfahrbewegung einer Antriebseinheit der elektrisch gesteuerten Maschine das Drehrad des Bedienelementes im ersten Sensorbereich gegriffen wird und durch Drehen des Drehrades zwischen den verschiedenen Bewegungsoptionen navigiert wird und durch axiales Verschieben der Hand des Maschinenbedieners vom ersten Sensorbereich in den zweiten Sensorbereich ein Bestätigungsbefehl in die Steuerung der Maschine eingegeben wird und die Verfahrbewegung gestartet wird, wobei optional durch Drehen des Drehrades während der Verfahrbewegung die Verfahrgeschwindigkeit durch Anwählen einer weiteren Bewegungsoption variiert werden kann.

Gemäß einer besonderen Ausprägung ist es möglich, dass zum Auswählen einer Verfahrbewegung einer Antriebseinheit der elektrisch gesteuerten Maschine das Drehrad des Bedienelementes im zweiten Sensorbereich gegriffen wird und durch Drehen des Drehrades zwischen den verschiedenen Bewegungsoptionen navigiert wird, wobei sofort nach Auswahl der Bewegungsoption ein Bestätigungsbefehl in die Steuerung der Maschine eingegeben wird und die Verfahrbewegung gestartet wird und wobei optional durch Drehen des Drehrades während der Verfahrbewegung die Verfahrgeschwindigkeit durch Anwählen einer weiteren Bewegungsoption variiert werden kann.

Entsprechend einer vorteilhaften Weiterbildung kann vorgesehen sein, dass zum Auswählen einer Verfahrgeschwindigkeit einer Antriebseinheit der elektrisch gesteuerten Maschine das Drehrad des Bedienelementes im ersten Sensorbereich gegriffen wird und durch Drehen des Drehrades verschiedene Verfahrgeschwindigkeiten stufenlos oder in Inkrementellsprüngen eingestellt werden können und durch axiales Verschieben der Hand des Maschinenbedieners vom ersten Sensorbereich in den zweiten Sensorbereich ein Bestätigungsbefehl in die Steuerung der Maschine eingegeben wird und die Verfahrbewegung gestartet wird, wobei optional durch Drehen des Drehrades während der Verfahrbewegung die Verfahrgeschwindigkeit durch variiert werden kann.

Insbesondere kann es vorteilhaft sein, wenn zum Auswählen einer Verfahrgeschwindigkeit einer Antriebseinheit der elektrisch gesteuerten Maschine das Drehrad des Bedienelementes im zweiten Sensorbereich gegriffen wird und durch Drehen des Drehrades verschiedene Verfahrgeschwindigkeiten stufenlos oder in Inkrementellsprüngen eingestellt werden können, wobei sofort nach Auswahl der Verfahrgeschwindigkeit ein Bestätigungsbefehl in die Steuerung der Maschine eingegeben wird und die Verfahrbewegung gestartet wird und wobei optional durch Drehen des Drehrades während der Verfahrbewegung die Verfahrgeschwindigkeit stufenlos oder in Inkrementellsprüngen variiert werden kann.

Ferner kann vorgesehen sein, dass durch entfernen der Hand vom zweiten Sensorbereich oder durch Loslassen des Drehrades die Verfahrbewegung gestoppt wird.

Darüber hinaus kann vorgesehen sein, dass nach dem Stoppen der Verfahrbewegung der eingestellte Wert für die Verfahrgeschwindigkeit oder die Verfahrbewegung vorausgewählt bleibt und bei erneutem Bewegen der Hand des Maschinenbedieners in den zweiten Sensorbereich die Antriebseinheit mit der dem voreingestellten Wert für die Verfahrbewegung oder Verfahrgeschwindigkeit bewegt wird.

Vorteilhaft ist auch eine Ausprägung, gemäß welcher vorgesehen sein kann, dass nach dem Stoppen der Verfahrbewegung der eingestellte Wert für die Verfahrgeschwindigkeit oder die Verfahrbewegung auf null gesetzt werden und eine erneute Verfahrbewegung durch vorheriges festlegen der Verfahrbewegung oder der Verfahrgeschwindigkeit gestartet werden muss.

Gemäß einer Weiterbildung ist es möglich, dass durch zweimaliges Drücken der Drucktaste ein Hauptmenü am Anzeigedisplay angezeigt wird und für weitere Befehle zugänglich ist.

Ferner kann es zweckmäßig sein, wenn durch einmaliges Drücken der Drucktaste ein vordefinierbares Untermenü, insbesondere ein Menü zum Auswählen einer Verfahrbewegung einer Antriebseinheit der elektrisch gesteuerten Maschine, am Anzeigedisplay angezeigt wird und für weitere Befehle zugänglich ist. Durch diese Maßnahme kann die Menüführung an der Maschine beschleunigt werden, da ein häufig verwendetes Menü dem Befehl zugeordnet werden kann.

Darüber hinaus kann vorgesehen sein, dass durch langes Drücken der Drucktaste mehrere Fehlermeldungen gleichzeitig quittiert werden können. Dies kann insbesondere von Vorteil sein, wenn mehrere Fehler auftauchen und der Maschinenbediener nicht jede Fehlermeldung einzeln quittieren will. Dadurch kann eine Zeitersparnis erreicht werden.

Weiters kann vorgesehen sein, dass zum Navigieren zwischen verschiedenen Hierarchieebenen von Untermenüs das Drehrad des Bedienelementes im Greifbereich gegriffen wird und durch Drehen des Drehrades zwischen verschiedenen Untermenüebenen navigiert werden kann. Durch diese Maßnahme kann der Maschinenbediener aus einem Untermenü heraus, bzw. auch wieder in das Untermenü hinein navigieren.

Sämtliche am Drehrad angeordnete Sensoren können als einzelne Sensorelemente ausgebildet sein, welche dazu vorgesehen sind, um den jeweilig zugehörigen Sensorbereich zu erfassen.

Es ist jedoch auch denkbar, dass einem Sensorbereich zwei oder eine Vielzahl von Sensorelemente zugeordnet sind, welche den Sensorbereich erfassen. Das Vorsehen von mehreren Sensorelementen für einen Sensorbereich kann den Vorteil mit sich bringen, dass eine Redundanz ermöglicht wird und daher ein Ausfall eines Sensorelementes kompensiert werden kann. Dies kann insbesondere zu Erhöhung der Maschinensicherheit notwendig sein.

Insbesondere kann vorgesehen sein, dass die Sensorelemente dazu ausgebildet sind, um Berührungen durch den Maschinenbediener in bestimmten Bereichen des Drehrades zu erfassen.

Die Sensorelemente an sich können beispielsweise als resistive Senoren ausgebildet sein.

Eine weitere Möglichkeit ist, dass die Sensorelemente in Form von optischen Sensoren ausgebildet sind.

Generell können die Sensorelemente durch jegliche Sensorelemente realisiert werden, welche dazu geeignet sind eine Berührung des Drehrades durch die Hand des Maschinenbedieners zu erfassen.

Die Sensorelemente können an der Oberfläche des Drehrades angeordnet sein, oder in das Drehrad eingegossen oder durch sonstige Maßnahmen, wie dem Vorsehen von entsprechenden Aufnahmebereichen integriert sein.

In einer ersten Ausführung kann vorgesehen sein, dass das Drehrad aus einem metallischen Werkstoff gebildet ist.

In einer weiteren Ausführung kann vorgesehen sein, dass das Drehrad aus einem Kunststoff gebildet ist.

Darüber hinaus kann auch vorgesehen sein, dass das Drehrad als zusammengesetztes Bauteil aus verschiedenen Werkstoffen gebildet ist.

Zum besseren Verständnis der Erfindung wird diese anhand der nachfolgenden Figuren näher erläutert.

Es zeigen jeweils in stark vereinfachter, schematischer Darstellung:
- Fig. 1: ein Layout einer Fertigungsanlage mit einer Maschine, einer Steuerung und einem Bedienelement;
- Fig. 2: das Bedienelement in einer Vorderansicht;
- Fig. 3: das Bedienelement in einer Seitenansicht;
- Fig. 4: das Bedienelement in einer Seitenansicht mit einer Hand eines Maschinenbedieners im Greifbereich;
- Fig. 5: das Bedienelement in einer Seitenansicht mit der Hand des Maschinenbedieners im ersten Sensorbereich;
- Fig. 6: das Bedienelement in einer Seitenansicht mit der Hand des Maschinenbedieners im ersten und zweiten Sensorbereich;
- Fig. 7: das Bedienelement in einer Seitenansicht mit der Hand des Maschinenbedieners am Umfangsabschnitt eines Absatzes;
- Fig. 8: das Bedienelement in einer Vorderansicht mit Darstellung eines Home-Bildschirms im Anzeigeelement;
- Fig. 9: das Bedienelement in einer Vorderansicht mit Darstellung eines Parametereinstell-Bildschirms im Anzeigeelement;
- Fig. 10: das Bedienelement in einer Vorderansicht mit Darstellung eines Parametereinstell-Bildschirms und ausgewähltem Parameterwert im Anzeigeelement;
- Fig. 11: das Bedienelement in einer Vorderansicht mit Darstellung eines Verfahrbewegungs-Bildschirms im Anzeigeelement;
- Fig. 12: das Bedienelement in einer Vorderansicht mit Darstellung eines Verfahrgeschwindigkeits-Bildschirms im Anzeigeelement;
- Fig. 13: das Bedienelement in einer Vorderansicht mit Darstellung eines Verfahrgeschwindigkeits-Bildschirms und eingestelltem Verfahrgeschwindigkeitswert im Anzeigeelement;
- Fig. 14: das Bedienelement in einer Vorderansicht mit Darstellung eines Untermenüselektions-Bildschirms im Anzeigeelement.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

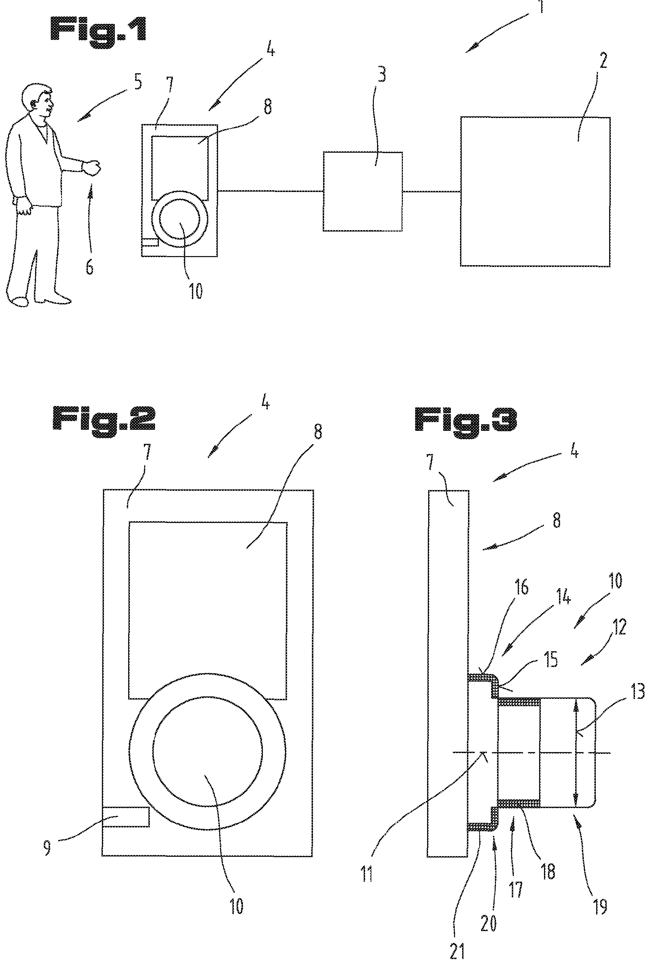

Fig. 1 zeigt eine schematische Darstellung einer Fertigungsanlage 1 mit einer elektrisch gesteuerten Maschine 2, einer Steuerung 3 für die Maschine 2 und einem Bedienelement 4 zur Eingabe von Steuerbefehlen in die Steuerung 3 durch einen Maschinenbediener 5. Insbesondere ist vorgesehen, dass der Maschinenbediener 5 mit dessen Hand 6 das Bedienelement 4 bedient.

Die Maschine 2 kann beispielsweise eine Spritzgießmaschine sein. Weiters ist es auch denkbar, dass die Maschine 2 ein Roboter oder eine sonstige Maschine im industriellen Einsatz ist. Insbesondere kann vorgesehen sein, dass die Maschine 2 zum Fertigen von Bauteilen dient.

Die Steuerung 3 kann durch jede mögliche erdenkliche Art von Steuerung gebildet sein. Dies kann beispielsweise ein Industrierechner, eine speicherprogrammierbare Steuerung oder eine sonstige Steuerung sein, welche dazu geeignet ist, die über das Bedienelement 4 eingegebenen Befehle in Bewegungsbefehle für die Maschine 2 umzuwandeln.

In den Fig. 2 und 3 ist das Bedienelement 4 in einer Vorderansicht bzw. in einer Seitenansicht dargestellt.

Wie aus diesen beiden Figuren ersichtlich, kann vorgesehen sein, dass das Bedienelement 4 einen Bedienelementkörper 7 aufweist, welcher den zentralen Bauteil des Bedienelementes 4 bildet und beispielsweise durch ein Gehäuse definiert sein kann. Weiters kann vorgesehen sein, dass im Bedienelementkörper 7 ein Anzeigedisplay 8 aufgenommen ist. Das Anzeigedisplay 8 dient zum Anzeigen von Menüpunkten, Geschwindigkeitsstellungen und sonstigen Parametern oder Optionen, welche für die Steuerung der Maschine 2 notwendig sind. In einer weiteren Ausführungsvariante kann auch vorgesehen sein, dass das Anzeigedisplay 8 nicht im Bedienelement 4 integriert ist, sondern dass das Anzeigedisplay 8 an anderer Stelle in der Fertigungsanlage 1 angeordnet ist.

Darüber hinaus kann vorgesehen sein, dass das Bedienelement 4 ortsfest an der Fertigungsanlage 1 angeordnet ist und mittels einer kabelgebundenen Verbindung mit der Fertigungsanlage 1 gekoppelt ist.

In einer alternativen Ausführungsvariante kann auch vorgesehen sein, dass das Bedienelement 4 in Form einer Fernbedienung ausgebildet ist und über eine drahtlose Verbindung mit der Steuerung 3 kommuniziert.

Weiters kann vorgesehen sein, dass die Steuerung 3 im Bedienelement 4 integriert ist und die Steuerbefehle direkt vom Bedienelement 4 an die Maschine 2 gegeben werden.

Wie aus Fig. 2 weiters ersichtlich, kann vorgesehen sein, dass am Bedienelement 4 eine oder mehrere Drucktasten 9 angeordnet sind. Die Drucktasten 9 können dazu dienen, um diverse Befehle durch den Maschinenbediener 5 in das Bedienelement 4 einzugeben.

Erfindungsgemäß ist am Bedienelementkörper 7 ein Drehrad 10 angeordnet, welches bezüglich einer Rotationsachse 11 relativ zum Bedienelementkörper 7 verdrehbar ist. Das Drehrad 10 bildet einen zentralen Bestandteil des Bedienelementes 4. Die Drucktaste 9 kann optional vom Bedienelementkörper 7 weggelassen werden und deren Funktion ebenfalls im Drehrad 10 realisiert werden.

Entgegen der aus dem Stand der Technik bekannten Ausführungen ist vorgesehen, dass das Drehrad 10 nur um die Rotationsachse 11 drehbar am Bedienelementkörper 7 gelagert ist. Durch die in weiterer Folge noch näher beschriebene Ausführung des Drehrades 10 ist es nicht notwendig, dass dieses relativ zum Bedienelementkörper 7 axial verschiebbar bzw. verschwenkbar ist.

Dadurch dass das Drehrad 10 nur drehbar am Bedienelementkörper 7 aufgenommen ist, kann die Anbindungsstelle zwischen Drehrad 10 und Bedienelementkörper 7 in Form eines einfachen Drehsensors ausgebildet sein, wodurch das Drehrad 10 eine geringe Fehleranfälligkeit aufweist.

Insbesondere kann vorgesehen sein, dass das Drehrad 10 eine Mantelfläche 12 aufweist, welches die Rotationsachse 11 umgibt und dazu dient, dass der Maschinenbediener 5 das Drehrad 10 greifen kann und bezüglich seiner Rotationsachse 11 verdrehen kann. Insbesondere kann vorgesehen sein, dass die Mantelfläche 12 des Drehrades 10 im Wesentlichen rotationssymmetrisch bezüglich der Rotationsachse 11 ausgebildet ist und einen Durchmesser 13 aufweist.

In einer besonderen Ausprägung kann vorgesehen sein, dass das Drehrad 10 im Wesentlichen zylinderförmig ausgebildet ist. Weiters kann vorgesehen sein, dass an der Mantelfläche 12 des Drehrades 10 Strukturelemente ausgebildet sind, welche den Halt der Hand 6 des Maschinenbedieners 5 am Drehrad 10 verbessern können. Insbesondere kann vorgesehen sein, dass die Strukturelemente an der Mantelfläche 12 in Form von parallel zur Rotationsachse 11 verlaufenden Rippen bzw. Nuten ausgebildet ist, sodass ermöglicht ist, dass der Maschinenbediener 5 seine Hand 6 am Drehrad 10 axial längs der Rotationsachse 11 verschiebt.

Weiters kann vorgesehen sein, dass am Drehrad 10 ein Absatz 14 ausgebildet ist, welcher als Anschlag für die Hand des Maschinenbedieners 5 dient und somit der Maschinenbediener 5 die Position seiner Hand 6 weiß. Insbesondere kann vorgesehen sein, dass eine Stirnseite 15 des Absatzes 14 als Anschlag für die Hand 6 des Maschinenbedieners 5 dient. Weiters kann vorgesehen sein, dass der Absatz 14 einen Umfangsbereich 16 aufweist, welchen der Maschinenbediener 5 ebenfalls greifen und zum Drehen des Drehrades 10 verwenden kann.

Weiters kann vorgesehen sein, dass am Drehrad 10 ein erster Sensorbereich 17 ausgebildet ist, welcher von einem ersten Sensorelement 18 erfasst ist. Der erste Sensorbereich 17 kann beispielsweise an der Mantelfläche 12 des Drehrades 10 ausgebildet sein. Weiters kann vorgesehen sein, dass an der Mantelfläche 12 des Drehrades 10 ein Griffbereich 19 ausgebildet ist, welcher axial zum ersten Sensorbereich 17 beabstandet ist. Insbesondere kann vorgesehen sein, dass im Griffbereich 19 kein Sensorelement angeordnet ist.

Wie aus Fig. 3 weiters ersichtlich, kann vorgesehen sein, dass der erste Sensorbereich 17 näher am Bedienelementkörper 7 angeordnet ist als der Greifbereich 19. Insbesondere kann vorgesehen sein, dass der erste Sensorbereich 17 direkt an die Stirnseite 15 des Absatzes 14 anschließend angeordnet ist.

Der erste Sensorbereich 17 kann am Drehrad 10 vollumfänglich ausgebildet sein und eine ausreichend große Axialerstreckung aufweisen, um die Hand 6 des Maschinenbedieners 5 erfassen zu können.

Weiters kann vorgesehen sein, dass am Drehrad 10 ein zweiter Sensorbereich 20 mit einem zweiten Sensorelement 21 angeordnet ist. Insbesondere kann vorgesehen sein, dass der zweite Sensorbereich 20 vollumfänglich an der Stirnseite 15 des Absatzes 14 ausgebildet ist.

In einer weiteren Ausführungsvariante kann vorgesehen sein, dass sich der zweite Sensorbereich 20 von der Stirnseite 15 des Absatzes 14 bis in den Umfangsbereich 16 des Absatzes 14 hinein erstreckt.

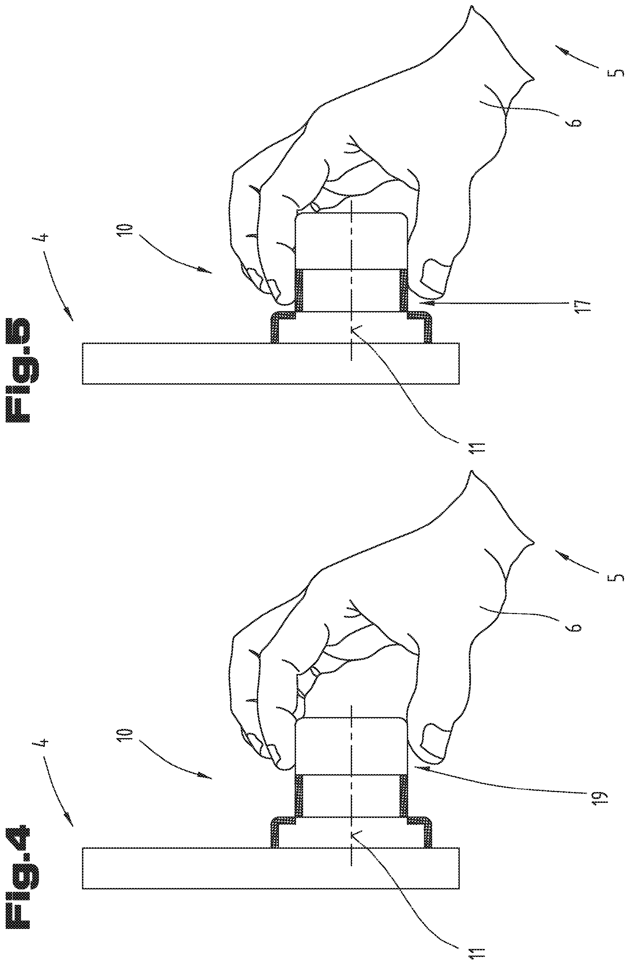

In den Fig. 4 bis 7 sind verschiedene mögliche Stellungen der Hand 6 des Maschinenbedieners 5 dargestellt.

In den Fig. 4 bis 6 ist dabei das Bedienelement 4, wie es in Fig. 3 dargestellt wurde, verwendet.

In Fig. 4 ist eine erste Möglichkeit dargestellt, wie das Drehrad 10 des Bedienelementes 4 gegriffen werden kann. Entsprechend der Darstellung in Fig. 4 kann das Drehrad 10 im Greifbereich 19 gegriffen werden, wobei vorgesehen sein kann, dass im Greifbereich 19 kein Sensorelement ausgebildet ist. Dadurch dass vorgesehen sein, dass sämtliche andere Bereiche des Drehrades 10 mit einem Sensorelement ausgestattet sein können, kann bei einer Drehbewegung am Drehrad 10 die Hand 6 des Maschinenbedieners 5 auch dem Greifbereich 19 eindeutig zugeordnet werden.

Wie aus Fig. 5 ersichtlich, kann auch vorgesehen sein, dass die Hand 6 des Maschinenbedieners 5 das Drehrad 10 im ersten Sensorbereich 17 greift. Dies kann ebenfalls einen eigenen Befehl in der Steuerung 3 der Maschine 2 auslösen.

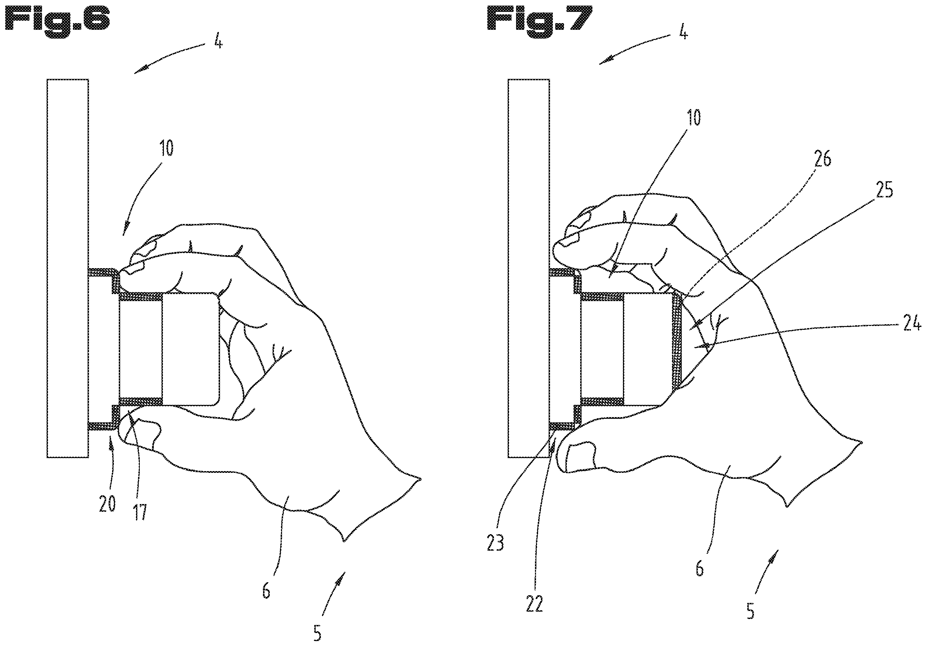

Weiters kann vorgesehen sein, dass, wie in Fig. 6 dargestellt, die Hand 6 des Maschinenbedieners 5 das Drehrad 10 derart greift, dass sowohl der erste Sensorbereich 17 als auch der zweite Sensorbereich 20 an der Stirnseite 15 des Absatzes 14 berührt werden. Dies kann ebenfalls einen eigenen Befehl auslösen. Der Kürze halber wird dabei von einem Greifen des Drehrades 10 im zweiten Sensorbereich 20 gesprochen.

Beispielsweise ist es möglich, dass die Hand 6 des Maschinenbedieners 5 von einer Stellung wie sie in Fig. 5 dargestellt ist, in eine Stellung wie sie in Fig. 6 dargestellt ist, nach vorne gleitet. Diese Bewegung wird vorzugsweise als Bestätigungsbefehl verwendet. Weiters kann, wie in Fig. 7 dargestellt, die Hand 6 des Maschinenbedieners 5 das Drehrad 10 ebenfalls am Umfangsbereich 16 des Absatzes 14 greifen. Wenn der zweite Sensorbereich 20 sich über die Stirnseite 15 und den Umfangsbereich 16 des Absatzes 14 erstreckt, führt dies dazu, dass der zweite Sensorbereich 20 aktiviert wird.

In der Fig. 7 ist eine weitere und gegebenenfalls für sich eigenständige Ausführungsform des Drehrades 10 gezeigt, wobei wiederum für gleiche Teile gleiche Bezugszeichen bzw. Bauteilbezeichnungen wie in den vorangegangenen Figuren 1 bis 6 verwendet werden. Um unnötige Wiederholungen zu vermeiden, wird auf die detaillierte Beschreibung in den vorangegangenen Figuren 1 bis 6 hingewiesen bzw. Bezug genommen.

Gemäß dem Ausführungsbeispiel in Fig. 7 ist es auch denkbar, dass im Umfangsbereich 16 des Absatzes 14 ein dritter Sensorbereich 22 ausgebildet ist, welcher von einem dritten Sensorelement 23 erfasst wird. Bei einer derartigen Ausführung kann das Berühren der Stirnseite 15 des Absatzes 14 und das Berühren des Umfangsbereiches 16 des Absatzes 14 jeweils einen unterschiedlichen Befehl auslösen. Beispielsweise ist es auch denkbar, dass bei Verwendung eines dritten Sensorbereiches 22 die Hand 6 des Maschinenbedieners 5 entsprechend den Darstellungen in Fig. 5 oder 6 positioniert ist und nur ein oder mehrere Finger auf den dritten Sensorbereich 22 gelegt werden, um einen bestimmten Befehl auszulösen.

Weiters kann auch vorgesehen sein, dass an einer Stirnseite 24 des Drehrades 10 ein vierter Sensorbereich 25 mit einem vierten Sensorelement 26 ausgebildet ist. Ein derartiger vierter Sensorbereich 25 kann ebenfalls zum Eingeben von Steuerbefehlen dienen.

Darüber hinaus kann vorgesehen sein, dass am Drehrad 10 weitere Sensorbereiche ausgebildet sind.

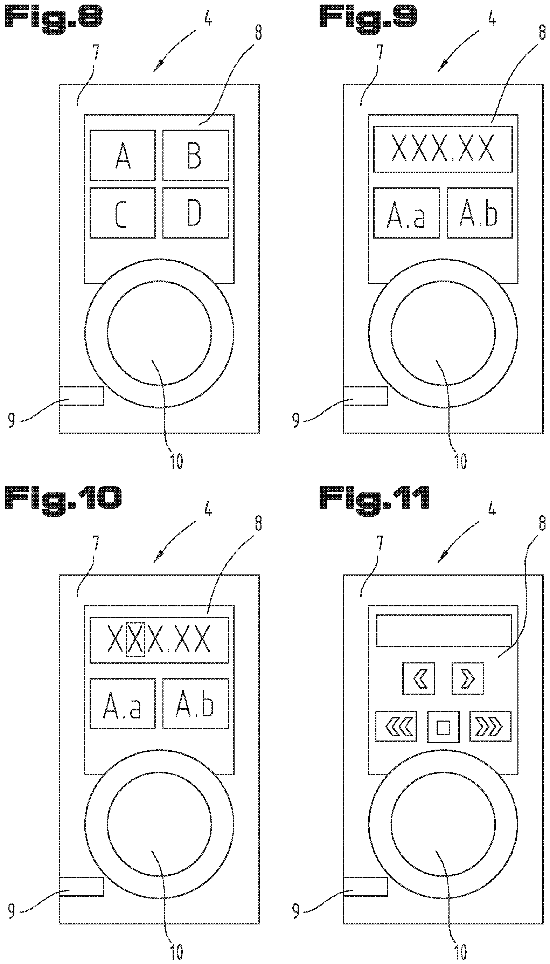

Anhand der Fig. 8 bis 13 wird ein mögliches Verfahren zur Eingabe von Steuerbefehlen in die Steuerung 3 der Fertigungsanlage 1 beschrieben. Die einzelnen Verfahrensschritte sind beispielsweise mit einem Bedienelement 4, wie es in den Fig. 2 und 3 dargestellt ist, mit zwei Sensorbereichen durchführbar. Insbesondere können dabei die Handgriffe, wie sie in den Fig. 4 bis 6 dargestellt sind, verwendet werden.

In der Fig. 8 ist ein Hauptbildschirm bzw. Homescreen im Anzeigedisplay 8 angezeigt. Der Hauptbildschirm bzw. Homescreen kann beispielsweise dann erscheinen, wenn die Fertigungsanlage 1 bzw. das Bedienelement 4 erstmalig gestartet wird. Weiters ist es auch denkbar, dass zu jedem beliebigen Zeitpunkt der Homescreen dadurch aufgerufen wird, dass die Drucktaste 9 zweimal gedrückt wird.

Natürlich ist es auch denkbar, dass der Befehl zum Anzeigen des Hauptbildschirms durch eine spezielle Stellung der Hand 6 des Maschinenbedieners 5 am Drehrad 10 gegeben wird. Hierzu können als entsprechende Eingabeelemente beispielsweise der dritte Sensorbereich 22 und/oder der vierte Sensorbereich 25 dienen.

Wie aus Fig. 8 ersichtlich, kann vorgesehen sein, dass im Hauptbildschirm mehrere Untermenüpunkte, welche in den Blöcken A bis D exemplarisch dargestellt sind, aufrufbar sind. Die einzelnen Untermenüpunkte können beispielsweise zum Eingeben von Parametern für die Maschine 2 bzw. zum Verfahren von einzelnen Antriebseinheiten in der Maschine 2 oder auch für sonstige Verstellmöglichkeiten dienen.

In einem ersten Modus kann vorgesehen sein, dass der Hauptbildschirm, wie er in Fig. 8 dargestellt ist, angezeigt wird, wobei keines der Untermenüs A bis D selektiert ist. Durch Greifen des Drehrades 10 im ersten Sensorbereich 17, wie dies in Fig. 5 dargestellt ist, kann ein Selektionsfeld über das erste Untermenü A gezogen werden. Durch anschließendes Drehen des Drehrades 10 kann das Selektionsfeld auf ein gewünschtes Untermenü A bis D verschoben werden und durch anschließendes Nachvorschieben der Hand 6 gemäß der Darstellung in Fig. 6 und dadurch ausführen des Bestätigungsbefehls das ausgewählte Untermenü geöffnet werden.

In einem zweiten Modus ist es auch denkbar, dass das Drehrad 10 entsprechend der Darstellung in Fig. 6 so gegriffen wird, dass sowohl der erste Sensorbereich 17 als auch der zweite Sensorbereich 20 aktiviert werden, wobei ebenfalls das Untermenü A selektiert werden kann. Auch hier ist es denkbar, dass durch Drehen des Drehrades 10 zwischen den einzelnen Untermenüs A bis D ausgewählt werden kann. Durch anschließendes Entfernen der Hand 6 von der Stellung gemäß Fig. 6 kann das ausgewählte Untermenü geöffnet werden. Dies kann beispielsweise durch Verschieben der Hand 6 aus der Stellung gemäß Fig. 6 in eine Stellung gemäß Fig. 5 oder durch komplettes Wegnehmen der Hand 6 vom Drehrad 10 erreicht werden.

In den Fig. 9 und 10 ist der Bildschirm eines ersten Untermenüs dargestellt, welches beispielsweise zum Eingeben von Parameterwerten dienen kann.

Wie aus Fig. 9 ersichtlich, kann vorgesehen sein, dass im Untermenü A zum Einstellen der Parameterwerte weitere Untermenüs, wie beispielsweise A.a oder A.b zum Selektieren von einzelnen Parameterwerten vorgesehen sein können. Durch Greifen des Drehrades 10 im ersten Sensorbereich 17 gemäß der Darstellung in Fig. 5 kann ein Selektionsfeld über das Untermenü A.a gezogen werden, wobei in einem oberen Bildschirmbereich der aktuelle Parameterwert für den jeweils selektierten Parameter angezeigt werden kann. Durch Drehen des Drehrades 10 kann die Selektionsfeld zwischen den einzelnen Parametern verschoben werden. Um den Parameterwert eines bestimmten Parameters verstellen zu können, kann der jeweilig selektierte Parameter durch den Bestätigungsbefehl, daher kurzes Nachvorschieben der Hand 6 in die Stellung gemäß Fig. 5, angewählt werden.

Dabei kann gemäß der Darstellung in Fig. 10 eine bestimmte Ziffer des Parameterwertes selektierbar gemacht werden, wobei durch Drehung des Drehrades 10 zwischen den einzelnen Ziffern des Parameterwertes selektiert werden kann und durch einen neuerlichen Bestätigungsbefehl der Hand 6 eine bestimmte Ziffer einstellbar gemacht werden kann, wobei durch Drehung des Drehrades 10 der Wert der Ziffer verstellt werden kann und anschließend durch einen weiteren Bestätigungsbefehl mittels Nachvorschieben der Hand 6 bestätigt werden kann. Anschließend kann eine weitere Ziffer des Parameterwertes verstellt werden.

In einem zweiten Modus ist es auch denkbar, dass analog zum im Homemenü beschriebenen zweiten Modus das Drehrad 10 zum Selektieren von einzelnen Parameterwerten bzw. Ziffern eines Parameters und Wert der Ziffern des Parameters gemäß der Darstellung in Fig. 6 direkt im ersten Sensorbereich 17 und zweiten Sensorbereich 20 gegriffen wird. Bei anschließendem Verschieben der Hand 6 von einer Stellung gemäß der Darstellung von Fig. 6 in eine Stellung gemäß der Darstellung von Fig. 5 bzw. beim Loslassen des Drehrades 10 kann dabei der Bestätigungsbefehl ausgelöst werden. Weiters ist es auch denkbar, dass im zweiten Modus, wenn das Drehrad 10 gemäß der Darstellung in Fig. 6 direkt im ersten Sensorbereich 17 und zweiten Sensorbereich 20 gegriffen wird, nicht einzelne Ziffernwerte des Parameterwertes verstellbar sind, sondern dass der Parameterwert als Ganzes verstellbar ist.

In Fig. 11 ist ein Untermenü zum Einstellen einer Verfahrbewegung für eine bestimmte Antriebseinheit dargestellt.

Wie aus Fig. 11 ersichtlich, kann vorgesehen sein, dass beispielsweise eine Vorwärtsbewegung in zwei verschiedenen vorgegebenen Verfahrgeschwindigkeiten bzw. eine Rückwärtsbewegung in zwei verschiedenen vorgegebenen Verfahrgeschwindigkeiten und auch ein Verfahrstopp selektierbar sind. In einem ersten Modus kann wieder vorgesehen sein, dass das Drehrad 10 im ersten Sensorbereich 17 gemäß der Darstellung in Fig. 5 gegriffen wird, wobei ein Selektionsfeld über den Block Verfahrstopp gezogen wird. Anschließend kann durch Drehung des Drehrades 10 die gewünschte Verfahroption ausgewählt werden und wieder durch Nachvorschieben der Hand 6 der Bestätigungsbefehl gegeben werden. Dadurch kann die gewünschte und vorausgewählte Verfahrbewegung eingeleitet werden.

Während dem Ausführen der Verfahrbewegung ist es denkbar, dass eine weitere gewünschte Verfahrbewegung selektiert wird und wieder durch Bestätigung durch Vorschieben der Hand 6 ausgewählt wird.

Insbesondere kann vorgesehen sein, dass die Verfahrbewegung nur solange durchgeführt wird, solange sich die Hand 6 in einem der Sensorbereiche befindet und dass bei Loslassen des Drehrades 10 die Verfahrbewegung gestoppt wird.

In einem zweiten Modus kann wieder vorgesehen sein, dass das Drehrad 10 im ersten Sensorbereich 17 und im zweiten Sensorbereich 20 gemäß der Darstellung in Fig. 6 gegriffen wird und dadurch der Maschinenstopp selektiert wird. Durch anschließendes Drehen des Drehrades kann die jeweilige Verfahrstellung gewählt werden, wobei die Verfahrbewegung der Maschine 2 unmittelbar nach Auswählen der jeweiligen Verfahrstellung gestartet wird und ein gesonderter Startbefehl nicht notwendig ist.

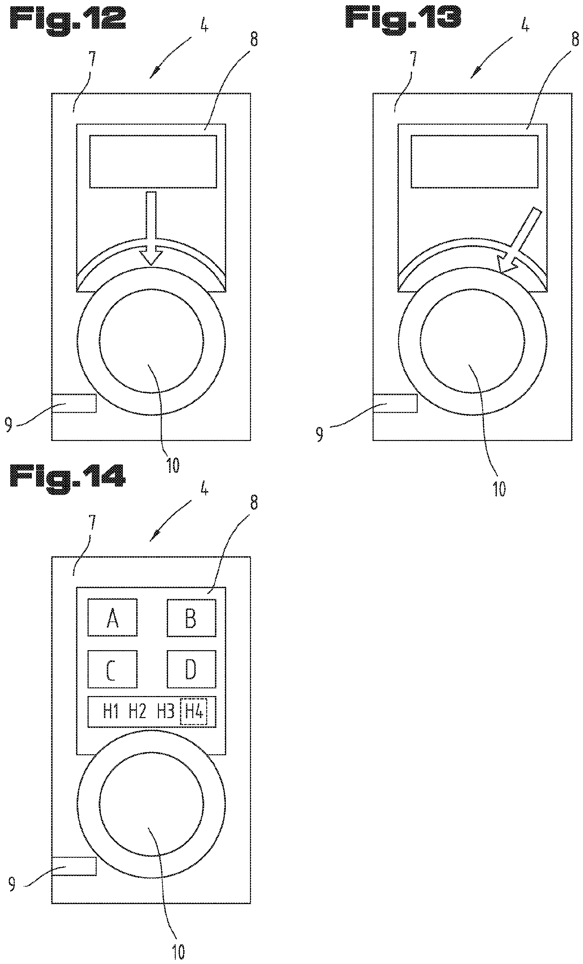

In den Figuren 12 und 13 ist ein weiteres Untermenü zum Auswählen einer Verfahrgeschwindigkeit für eine Antriebseinheit der Maschine 2 dargestellt. Hierbei kann vorgesehen sein, dass durch Greifen des Drehrades 10 im ersten Sensorbereich 17 gemäß der Darstellung in Fig. 5 der Geschwindigkeitspfeil aktiviert wird und durch Drehung des Drehrades 10 eine bestimmte Verfahrgeschwindigkeit vorgewählt wird. Die eingestellte Verfahrgeschwindigkeit kann im Anzeigedisplay 8 beispielsweise durch einen Pfeil grafisch bzw. durch einen Zahlenwert dargestellt werden. Bei anschließender Bestätigung des gemäß Fig. 13 eingestellten Zahlenwertes der Verfahrgeschwindigkeit kann die Verfahrbewegung gestartet werden. Die Bestätigung und Starten der Verfahrbewegung kann ebenfalls durch Nachvorschieben der Hand 6 in die Stellung gemäß Fig. 5 ausgelöst werden. Anschließend kann optional eine weitere Verfahrgeschwindigkeit ausgewählt werden und ebenfalls durch Bestätigen aktiviert werden. Auch hier kann ein zweiter Modus vorgesehen sein, in welchem das Drehrad 10 im ersten Sensorbereich 17 und im zweiten Sensorbereich 20 gemäß der Darstellung in Fig. 6 gegriffen wird und durch anschließende Drehung des Drehrades 10 die Verfahrbewegung der Antriebseinheit direkt gestartet wird und die Geschwindigkeit durch Drehung des Drehrades 10 variiert werden kann.

Auch bei den beiden Modi der Geschwindigkeitseinstellungen gemäß der Figuren 12 und 13 ist es denkbar, dass beim Loslassen des Drehrades 10 die Verfahrbewegung sofort gestoppt wird.

Gemäß einer Darstellung in Fig. 14 ist es denkbar, dass ein Auswählen bzw. ein Springen zwischen einzelnen Untermenüebenen dadurch erreicht wird, dass das Drehrad 10 gemäß der Darstellung in Fig. 4 im Greifbereich 19 gegriffen wird. Durch Drehen des Drehrades 10 kann zwischen den einzelnen Ebenenhierarchien gewählt werden. Durch ein Nachvorschieben der Hand 6 in den ersten Sensorbereich 17 gemäß der Darstellung in Fig. 5 oder in den zweiten Sensorbereich 20 gemäß der Darstellung in Fig. 6 kann eine Auswahl der jeweilig angewählten Ebenenhierarchie erreicht werden.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Fertigungsanlage
- 2: Maschine
- 3: Steuerung
- 4: Bedienelement
- 5: Maschinenbediener
- 6: Hand
- 7: Bedienelementkörper
- 8: Anzeigedisplay
- 9: Drucktaste
- 10: Drehrad
- 11: Rotationsachse
- 12: Mantelfläche
- 13: Durchmesser
- 14: Absatz
- 15: Stirnseite Absatz
- 16: Umfangsbereich Absatz
- 17: erster Sensorbereich
- 18: erstes Sensorelement
- 19: Greifbereich
- 20: zweiter Sensorbereich
- 21: zweites Sensorelement
- 22: dritter Sensorbereich
- 23: drittes Sensorelement
- 24: Stirnseite Drehrad
- 25: vierter Sensorbereich
- 26: viertes Sensorelement

## Patentansprüche

1. Bedienelement (4) für eine elektrisch gesteuerte Maschine (2), mit einem Bedienelementkörper (7) und einem Drehrad (10) zum Eingeben eines Befehls in eine Steuerung (3) der Maschine (2), wobei das Drehrad (10) um eine Rotationsachse (11) drehbar am Bedienelementkörper (7) angeordnet ist und die Rotationsachse (11) von einer Mantelfläche (12) umgeben ist, an welcher das Drehrad (10) von einem Maschinenbediener (5) ergreifbar und verdrehbar ist, wobei an der Mantelfläche (12) des Drehrades (10) ein erster Sensorbereich (17) ausgebildet ist, welcher von zumindest einem ersten Sensorelement (18) erfasst ist, mittels welchem ersten Sensorelement (18) eine Berührung des ersten Sensorbereiches (17) durch den Maschinenbediener (5) erfassbar ist,
**dadurch gekennzeichnet, dass**
an der Mantelfläche (12) des Drehrades (10) ein vom ersten Sensorbereich (17) axial beabstandeter Greifbereich (19) ausgebildet ist, wobei im Greifbereich (19) des Drehrades (10) kein Sensorelement angeordnet ist
und der erste Sensorbereich (17) näher am Bedienelementkörper (7) angeordnet ist als der Greifbereich (19)..

2. Bedienelement nach Anspruch 1, **dadurch gekennzeichnet, dass** der erste Sensorbereich (17) und der Greifbereich (19) axial zueinander beabstandet ausgebildet sind, wobei der erste Sensorbereich (17) vollumfänglich an der Mantelfläche (12) des Drehrades (10) ausgebildet ist.

3. Bedienelement nach Anspruch 1 oder 2, **dadurch gekennzeichnet, dass** an der Mantelfläche (12) des Drehrades (10) ein zweiter Sensorbereich (20) ausgebildet ist, an welchem zumindest ein zweites Sensorelement (21) angeordnet ist, wobei der erste Sensorbereich (17) und der zweite Sensorbereich (20) axial zueinander beabstandet am Drehrad (10) angeordnet sind.

4. Bedienelement nach einem der Ansprüche 2 oder 3, **dadurch gekennzeichnet, dass** der zweite Sensorbereich (20) näher am Bedienelementkörper (7) angeordnet ist als der erste Sensorbereich (17).

5. Bedienelement nach einem der vorhergehenden Ansprüche, **dadurch gekennzeichnet, dass** die Mantelfläche (12) des Drehrades (10) einen Absatz (14) aufweist, wobei insbesondere der erste Sensorbereich (17) oder der zweite Sensorbereich (20) an einer Stirnseite (15) am Absatz (14) angeordnet sind.

6. Bedienelement nach Anspruch 5, **dadurch gekennzeichnet, dass** sich der erste Sensorbereich (17) oder der zweite Sensorbereich (20) von der Stirnseite (15) des Absatzes (14) bis in einen Umfangsbereich (16) des Absatzes (14) erstrecken.

7. Bedienelement nach Anspruch 5, **dadurch gekennzeichnet, dass** in einem Umfangsbereich (16) des Absatzes (14) ein dritter Sensorbereich (22) mit zumindest einem dritten Sensorelement (23) ausgebildet ist.

8. Bedienelement nach einem der vorhergehenden Ansprüche, **dadurch gekennzeichnet, dass** das Drehrad (10) in dessen Grundkontur rotationssymmetrisch, insbesondere zylinderförmig, ausgebildet ist und einen Durchmesser (13) zwischen 20mm und 80mm, insbesondere zwischen 35mm und 60mm, bevorzugt zwischen 40mm und 50mm aufweist.

9. Bedienelement nach einem der vorhergehenden Ansprüche, **dadurch gekennzeichnet, dass** das oder die Sensorelemente (18, 21, 23) als kapazitative Sensoren ausgeführt sind.

10. Bedienelement nach einem der Ansprüche 1 bis 8, **dadurch gekennzeichnet, dass** das oder die Sensorelemente (18, 21, 23) durch eine Leitfähigkeitsmessung realisiert werden.

11. Bedienelement nach einem der vorhergehenden Ansprüche, **dadurch gekennzeichnet, dass** das oder die Sensorelemente (18, 21, 23) druckempfindlich ausgeführt sind und eine Größe einer Einwirkkraft einer Hand (6) des Maschinenbedieners (5) detektieren können.

12. Bedienelement nach einem der vorhergehenden Ansprüche, **dadurch gekennzeichnet, dass** am Bedienelementkörper (7) ein Anzeigedisplay (8) und eine Drucktaste (9) angeordnet sind.

13. Verfahren zur Eingabe eines Befehls in die Steuerung (3) der elektrisch gesteuerten Maschine (2) unter Verwendung eines Bedienelementes (4) mit einem Bedienelementkörper (7) und einem am Bedienelementkörper (7) bezüglich einer Rotationsachse (11) drehbar angeordneten Drehrad (10), wobei das Drehrad (10) einen Greifbereich (19) ohne Sensorelemente (18, 21, 23) und zumindest einen, davon axial beabstandeten, Sensorbereich (17, 20, 22) aufweist, insbesondere unter Verwendung eines Bedienelementes (4) nach einem der vorhergehenden Ansprüche, das Verfahren umfassend die folgenden Verfahrensschritte:
- Greifen des Drehrades (10) des Bedienelementes (4) im Greifbereich (19) oder in einem der Sensorbereiche (17, 20, 22) mittels der Hand (6) eines Maschinenbedieners (5);
- Eingeben von Selektionsbefehlen in die Steuerung (3) der Maschine (2) durch Drehen des Drehrades (10) des Bedienelementes (4) bezüglich seiner Rotationsachse (11);
- Eingeben von Auswahlbefehlen in die Steuerung (3) der Maschine (2) durch Axiales verschieben der Hand (6) des Maschinenbedieners (5) relativ zum Drehrad (10), sodass die Hand (6) des Maschinenbedieners (5) von einem der Sensorbereiche (17, 20, 22) in einen anderen Sensorbereich (17, 20, 22) oder vom Greifbereich (19) in einen der Sensorbereiche (17, 20, 22) oder von einem der Sensorbereiche (17, 20, 22) in den Greifbereich (19) gleitet, wobei dies vom jeweils betroffenen Sensorelement (18, 21, 23) detektiert und dadurch der Bestätigungsbefehl eingegeben wird.

14. Verfahren nach Anspruch 13, **dadurch gekennzeichnet, dass** zum Navigieren zwischen verschiedenen Menüpunkten das Drehrad (10) des Bedienelementes (4) in einem ersten Sensorbereich (17) gegriffen wird und durch Drehen des Drehrades (10) zwischen den verschiedenen Menüpunkten navigiert wird und durch axiales Verschieben der Hand (6) des Maschinenbedieners (5) vom ersten Sensorbereich (17) in einen zweiten Sensorbereich (20) ein Bestätigungsbefehl in die Steuerung (3) der Maschine (2) eingegeben wird und der angewählte Menüpunkt bestätigt und dadurch geöffnet wird.

15. Verfahren nach Anspruch 13, **dadurch gekennzeichnet, dass** zum Navigieren zwischen verschiedenen Menüpunkten das Drehrad (10) des Bedienelementes (4) im zweiten Sensorbereich (20) gegriffen wird und durch Drehen des Drehrades (10) zwischen den verschiedenen Menüpunkten navigiert wird und durch axiales Verschieben der Hand (6) des Maschinenbedieners (5) vom zweiten Sensorbereich (20) in den ersten Sensorbereich (17) oder durch Loslassen des Drehrades (10) ein Bestätigungsbefehl in die Steuerung (3) der Maschine (2) eingegeben wird und der angewählte Menüpunkt bestätigt und dadurch geöffnet wird.

16. Verfahren nach einem der Ansprüche 13 bis 15, **dadurch gekennzeichnet, dass** zum Einstellen eines Parameters in einer Auswahl einer Vielzahl von Parametern das Drehrad (10) des Bedienelementes (4) im ersten Sensorbereich (17) gegriffen wird und durch Drehen des Drehrades (10) zwischen den verschiedenen Parametern navigiert wird und durch axiales Verschieben der Hand (6) des Maschinenbedieners (5) vom ersten Sensorbereich (17) in den zweiten Sensorbereich (20) ein Bestätigungsbefehl in die Steuerung (3) der Maschine (2) eingegeben wird und der angewählte Parameter bestätigt und dadurch geöffnet und editierbar gemacht wird und dass anschließend die Hand (6) des Maschinenbedieners (5) wieder in den ersten Sensorbereich (17) geführt wird und durch Drehen des Drehrades (10) zwischen den einzelnen Ziffern des einzustellenden Parameters gewählt werden kann und abermals durch axiales Verschieben der Hand (6) des Maschinenbedieners (5) vom ersten Sensorbereich (17) in den zweiten Sensorbereich (20) ein Bestätigungsbefehl in die Steuerung (3) der Maschine (2) eingegeben wird und die angewählte Ziffer verstellbar wird und dass anschließend die Hand (6) des Maschinenbedieners (5) wieder in den ersten Sensorbereich (17) geführt wird und durch Drehen des Drehrades (10) der Wert der ausgewählten Ziffer gewählt werden kann und abermals durch axiales Verschieben der Hand (6) des Maschinenbedieners (5) vom ersten Sensorbereich (17) in den zweiten Sensorbereich (20) ein Bestätigungsbefehl in die Steuerung (3) der Maschine (2) eingegeben wird und der gewählte Wert der Ziffer bestätigt wird und eine neue Ziffer anwählbar ist.

17. Verfahren nach einem der Ansprüche 13 bis 15, **dadurch gekennzeichnet, dass** zum Einstellen eines Parameters in einer Auswahl einer Vielzahl von Parametern das Drehrad (10) des Bedienelementes (4) im ersten Sensorbereich (17) gegriffen wird und durch Drehen des Drehrades (10) zwischen den verschiedenen Parametern navigiert wird und durch axiales Verschieben der Hand (6) des Maschinenbedieners (5) vom ersten Sensorbereich (17) in den zweiten Sensorbereich (20) ein Bestätigungsbefehl in die Steuerung (3) der Maschine (2) eingegeben wird und der angewählte Parameter bestätigt und dadurch geöffnet und editierbar gemacht wird und dass durch Verdrehen des Drehrades (10) unter gleichzeitigem Halten der Hand (6) des Maschinenbedieners (5) im zweiten Sensorbereich (20) der komplette Parameterwert unter Einbezug all seiner Ziffern verstellt wird und dass durch Loslassen des Drehrades (10) oder durch axiales Verschieben der Hand (6) des Maschinenbedieners (5) vom zweiten Sensorbereich (20) in den ersten Sensorbereich (17) der eingestellte Parameterwert bestätigt wird.

18. Verfahren nach einem der Ansprüche 13 bis 17, **dadurch gekennzeichnet, dass** zum Auswählen einer Verfahrbewegung einer Antriebseinheit der elektrisch gesteuerten Maschine (2) das Drehrad (10) des Bedienelementes (4) im ersten Sensorbereich (17) gegriffen wird und durch Drehen des Drehrades (10) zwischen den verschiedenen Bewegungsoptionen navigiert wird und durch axiales Verschieben der Hand (6) des Maschinenbedieners (5) vom ersten Sensorbereich (17) in den zweiten Sensorbereich (20) ein Bestätigungsbefehl in die Steuerung (3) der Maschine (2) eingegeben wird und die Verfahrbewegung gestartet wird, wobei optional durch Drehen des Drehrades (10) während der Verfahrbewegung die Verfahrgeschwindigkeit durch Anwählen einer weiteren Bewegungsoption variiert werden kann.

19. Verfahren nach einem der Ansprüche 13 bis 17, **dadurch gekennzeichnet, dass** zum Auswählen einer Verfahrbewegung einer Antriebseinheit der elektrisch gesteuerten Maschine (2) das Drehrad (10) des Bedienelementes (4) im zweiten Sensorbereich (20) gegriffen wird und durch Drehen des Drehrades (10) zwischen den verschiedenen Bewegungsoptionen navigiert wird, wobei sofort nach Auswahl der Bewegungsoption ein Bestätigungsbefehl in die Steuerung (3) der Maschine (2) eingegeben wird und die Verfahrbewegung gestartet wird und wobei optional durch Drehen des Drehrades (10) während der Verfahrbewegung die Verfahrgeschwindigkeit durch Anwählen einer weiteren Bewegungsoption variiert werden kann.

20. Verfahren nach einem der Ansprüche 13 bis 19, **dadurch gekennzeichnet, dass** zum Auswählen einer Verfahrgeschwindigkeit einer Antriebseinheit der elektrisch gesteuerten Maschine (2) das Drehrad (10) des Bedienelementes (4) im ersten Sensorbereich (17) gegriffen wird und durch Drehen des Drehrades (10) verschiedene Verfahrgeschwindigkeiten stufenlos oder in Inkrementellsprüngen eingestellt werden können und durch axiales Verschieben der Hand (6) des Maschinenbedieners (5) vom ersten Sensorbereich (17) in den zweiten Sensorbereich (20) ein Bestätigungsbefehl in die Steuerung (3) der Maschine (2) eingegeben wird und die Verfahrbewegung gestartet wird, wobei optional durch Drehen des Drehrades (10) während der Verfahrbewegung die Verfahrgeschwindigkeit durch variiert werden kann.

21. Verfahren nach einem der Ansprüche 13 bis 19, **dadurch gekennzeichnet, dass** zum Auswählen einer Verfahrgeschwindigkeit einer Antriebseinheit der elektrisch gesteuerten Maschine (2) das Drehrad (10) des Bedienelementes (4) im zweiten Sensorbereich (20) gegriffen wird und durch Drehen des Drehrades (10) verschiedene Verfahrgeschwindigkeiten stufenlos oder in Inkrementellsprüngen eingestellt werden können, wobei sofort nach Auswahl der Verfahrgeschwindigkeit ein Bestätigungsbefehl in die Steuerung (3) der Maschine (2) eingegeben wird und die Verfahrbewegung gestartet wird und wobei optional durch Drehen des Drehrades (10) während der Verfahrbewegung die Verfahrgeschwindigkeit stufenlos oder in Inkrementellsprüngen variiert werden kann.

22. Verfahren nach einem der Ansprüche 18 bis 21, **dadurch gekennzeichnet, dass** durch entfernen der Hand (6) vom zweiten Sensorbereich (20) oder durch Loslassen des Drehrades (10) die Verfahrbewegung gestoppt wird.

23. Verfahren nach Anspruch 22, **dadurch gekennzeichnet, dass** nach dem Stoppen der Verfahrbewegung der eingestellte Wert für die Verfahrgeschwindigkeit oder die Verfahrbewegung vorausgewählt bleibt und bei erneutem Bewegen der Hand (6) des Maschinenbedieners (5) in den zweiten Sensorbereich (20) die Antriebseinheit mit der dem voreingestellten Wert für die Verfahrbewegung oder Verfahrgeschwindigkeit bewegt wird.

24. Verfahren nach Anspruch 22, **dadurch gekennzeichnet, dass** nach dem Stoppen der Verfahrbewegung der eingestellte Wert für die Verfahrgeschwindigkeit oder die Verfahrbewegung auf null gesetzt werden und eine erneute Verfahrbewegung durch vorheriges festlegen der Verfahrbewegung oder der Verfahrgeschwindigkeit gestartet werden muss.

25. Verfahren nach einem der Ansprüche 13 bis 24, **dadurch gekennzeichnet, dass** durch zweimaliges Drücken einer Drucktaste (9) ein Hauptmenü am Anzeigedisplay (8) angezeigt wird und für weitere Befehle zugänglich ist.

26. Verfahren nach einem der Ansprüche 13 bis 25, **dadurch gekennzeichnet, dass** durch einmaliges Drücken einer Drucktaste (9) ein vordefinierbares Untermenü, insbesondere ein Menü zum Auswählen einer Verfahrbewegung einer Antriebseinheit der elektrisch gesteuerten Maschine (2), am Anzeigedisplay (8) angezeigt wird und für weitere Befehle zugänglich ist.

27. Verfahren nach einem der Ansprüche 13 bis 26, **dadurch gekennzeichnet, dass** durch langes Drücken einer Drucktaste (9) mehrere Fehlermeldungen gleichzeitig quittiert werden können.

28. Verfahren nach einem der Ansprüche 13 bis 27, **dadurch gekennzeichnet, dass** zum Navigieren zwischen verschiedenen Hierarchieebenen von Untermenüs das Drehrad (10) eines Bedienelementes (4) im Greifbereich (19) gegriffen wird und durch Drehen des Drehrades (10) zwischen verschiedenen Untermenüebenen navigiert werden kann.

## Claims

1. An operating element (4) for an electrically controlled machine (2), with an operating element body (7) and a rotating wheel (10) for inputting a command into a controller (3) of the machine (2), wherein the rotating wheel (10) is arranged on the operating element body (7) in a rotatable manner about a rotational axis (11), and the rotational axis (11) is surrounded by a lateral surface (12), on which the rotating wheel (10) may be gripped and rotated by a machine operator (5), wherein the lateral surface (12) of the rotating wheel (10) is equipped with a first sensor region (17), which is detected by at least one first sensor element (18), by means of which first sensor element (18) a contact of the first sensor region (17) by the machine operator (5) may be detected,
**characterized in that**
a gripping region (19) arranged at an axial distance from the first sensor region (17) is formed on the lateral surface (12) of the rotating wheel (10), wherein no sensor element is arranged in the gripping region (19) of the rotation wheel (10)
and the first sensor region (17) is arranged closer to the operating element body (7) than the gripping region (19).

2. The operating element according to claim 1, **characterized in that** the first sensor region (17) and the gripping region (19) are arranged at an axial distance from one another, wherein the first sensor region (17) is entirely formed on the lateral surface (12) of the rotating wheel (10).

3. The operating element according to claim 1 or 2, **characterized in that** the lateral surface (12) of the rotating wheel (10) is equipped with a second sensor region (20), on which at least one second sensor element (21) is arranged, wherein the first sensor region (17) and the second sensor region (20) are arranged at an axial distance from one another on the rotating wheel (10).

4. The operating element according to one of claims 2 or 3, **characterized in that** the second sensor region (20) is arranged closer to the operating element body (7) than the first sensor region (17).

5. The operating element according to one of the preceding claims, **characterized in that** the lateral surface (12) of the rotating wheel (10) comprises an offset (14), wherein in particular the first sensor region (17) or the second sensor region (20) are arranged on a front side (15) on the offset (14).

6. The operating element according to claim 5, **characterized in that** the first sensor region (17) or the second sensor region (20) extend from the front side (15) of the offset (14) into a peripheral region (16) of the offset (14).

7. The operating element according to claim 5, **characterized in that** in a peripheral region (16) of the offset (14), a third sensor region (22) with at least one third sensor element (23) is formed.

8. The operating element according to one of the preceding claims, **characterized in that** the rotating wheel (10) is formed rotationally symmetrical, in particular cylindrical, in its basic contour and has a diameter (13) of between 20mm and 80mm, in particular between 35mm and 60mm, preferably between 40mm and 50mm.

9. The operating element according to one of the preceding claims, **characterized in that** the sensor element or the sensor elements (18, 21, 23) are designed as capacitive sensors.

10. The operating element according to one of claims 1 to 8, **characterized in that** the sensor element or the sensor elements (18, 21, 23) are realized by a conductivity measurement.

11. The operating element according to one of the preceding claims, **characterized in that** the sensor element or the sensor elements (18, 21, 23) are designed pressure-sensitively and capable of detecting a magnitude of an action force of a hand (6) of the machine operator (5).

12. The operating element according to one of the preceding claims, **characterized in that** a display (8) and a push button (9) are arranged on the operating element body (7).

13. A method for inputting a command into the controller (3) of the electrically controlled machine (2) while using an operating element (4) with an operating element body (7) and a rotating wheel (10) arranged on the operating element body (7) in a rotatable manner about a rotational axis (11), wherein the rotating wheel (10) comprises a gripping region (19) without sensor elements (18, 21, 23) and at least one sensor region (17, 20, 22) arranged at an axial distance therefrom, in particular while using an operating element (4) according to one of the preceding claims, the method comprising the following method steps:
- gripping the rotating wheel (10) of the operating element (4) in the gripping region (19) or in one of the sensor regions (17, 20, 22) by means of the hand (6) of a machine operator (5);
- inputting selection commands into the controller (3) of the machine (2) by turning the rotating wheel (10) of the operating element (4) about a rotational axis (11);
- inputting picking commands into the controller (3) of the machine (2) by axial movement of the hand (6) of the machine operator (5) in relation to the rotating wheel (10), such that the hand (6) of the machine operator (5) slides from one of the sensor regions (17, 20, 22) into another sensor region (17, 20, 22) or from the gripping region (19) into one of the sensor regions (17, 20, 22) or from one of the sensor regions (17, 20, 22) into the gripping region (19), wherein this is detected by the respectively concerned sensor element (18, 21, 23) and the confirmation command is thereby input.

14. The method according to claim 13, **characterized in that** for navigating between different menu items, the rotating wheel (10) of the operating element (4) is gripped in a first sensor region (17) and navigating between the different menu items is carried out by turning the rotating wheel (10) and by axial movement of the hand (6) of the machine operator (5) from the first sensor region (17) into a second sensor region (20), a confirmation command is input into the controller (3) of the machine (2) and that the selected menu item is confirmed and thereby opened.

15. The method according to claim 13, **characterized in that** for navigating between different menu items, the rotating wheel (10) of the operating element (4) is gripped in the second sensor region (20) and navigating between the different menu items is carried out by turning the rotating wheel (10) and by axial movement of the hand (6) of the machine operator (5) from the second sensor region (20) into the first sensor region (17) or by releasing the rotating wheel (10), a confirmation command is input into the controller (3) of the machine (2) and that the selected menu item is confirmed and thereby opened.

16. The method according to one of claims 13 to 15, **characterized in that** for setting a parameter in a selection of a plurality of parameters, the rotating wheel (10) of the operating element (4) is gripped in the first sensor region (17) and navigating between the different parameters is carried out by turning the rotating wheel (10), and by axial movement of the hand (6) of the machine operator (5) from the first sensor region (17) into the second sensor region (20), a confirmation command is input into the controller (3) of the machine (2) and the selected parameter is confirmed and thereby opened and made editable, and that subsequently, the hand (6) of the machine operator (5) is again moved into the first sensor region (17) and a selection between the individual digits of the parameter to be set may be made by turning the rotating wheel (10), and again by axial movement of the hand (6) of the machine operator (5) from the first sensor region (17) into the second sensor region (20), a confirmation command is input into the controller (3) of the machine (2) and the selected digit becomes adjustable, and that subsequently, the hand (6) of the machine operator (5) is again moved into the first sensor region (17) and the value of the selected digit may be chosen by turning the rotating wheel (10), and again by axial movement of the hand (6) of the machine operator (5) from the first sensor region (17) into the second sensor region (20), a confirmation command is input into the controller (3) of the machine (2), and the selected value of the digit is confirmed and a new digit may be selected.

17. The method according to one of claims 13 to 15, **characterized in that** for setting a parameter in a selection of a plurality of parameters, the rotating wheel (10) of the operating element (4) is gripped in the first sensor region (17) and navigating between the different parameters is carried out by turning the rotating wheel (10), and by axial movement of the hand (6) of the machine operator (5) from the first sensor region (17) into the second sensor region (20), a confirmation command is input into the controller (3) of the machine (2) and the selected parameter is confirmed and thereby opened and made editable, and **in that** by turning the rotating wheel (10) with simultaneous holding of the hand (6) of the machine operator (5) in the second sensor region (20), the entire parameter value including all of its digits is adjusted, and **in that** by releasing the rotating wheel (10) or by axial movement of the hand (6) of the machine operator (5) from the second sensor region (20) into the first sensor region (17), the set parameter value is confirmed.

18. The method according to one of claims 13 to 17, **characterized in that** for choosing a traversing movement of a drive unit of the electrically controlled machine (2), the rotating wheel (10) of the operating element (4) is gripped in the first sensor region (17), and navigating between the different movement options is carried out by turning the rotating wheel (10), and by axial movement of the hand (6) of the machine operator (5) from the first sensor region (17) into the second sensor region (20), a confirmation command is input into the controller (3) of the machine (2) and the traversing movement is started, wherein the traversing speed may optionally be varied by turning the rotating wheel (10) during the traversing movement by selecting a further movement option.

19. The method according to one of claims 13 to 17, **characterized in that** for choosing a traversing movement of a drive unit of the electrically controlled machine (2), the rotating wheel (10) of the operating element (4) is gripped in the second sensor region (20), and navigating between the different movement options is carried out by turning the rotating wheel (10), wherein immediately after the selection of the movement option, a confirmation command is input into the controller (3) of the machine (2) and the traversing movement is started, and wherein the traversing speed may optionally be varied by turning the rotating wheel (10) during the traversing movement by selecting a further movement option.

20. The method according to one of claims 13 to 19, **characterized in that** for choosing a traversing speed of a drive unit of the electrically controlled machine (2), the rotating wheel (10) of the operating element (4) is gripped in the first sensor region (17), and by turning the rotating wheel (10), different traversing speeds may be set continuously or in incremental steps, and by axial movement of the hand (6) of the machine operator (5) from the first sensor region (17) into the second sensor region (20), a confirmation command is input into the controller (3) of the machine (2) and the traversing movement is started, wherein the traversing speed may optionally be varied by turning the rotating wheel (10) during the traversing movement.

21. The method according to one of claims 13 to 19, **characterized in that** for choosing a traversing speed of a drive unit of the electrically controlled machine (2), the rotating wheel (10) of the operating element (4) is gripped in the second sensor region (20), and by turning the rotating wheel (10), different traversing speeds may be set continuously or in incremental steps, wherein immediately after the selection of the traversing speed, a confirmation command is input into the controller (3) of the machine (2) and the traversing movement is started, and wherein the traversing speed may optionally be varied continuously or in incremental steps by turning the rotating wheel (10) during the traversing movement.

22. The method according to one of claims 18 to 21, **characterized in that** by removing the hand (6) from the second sensor region (20) or by releasing the rotating wheel (10), the traversing movement is stopped.

23. The method according to claim 22, **characterized in that** after the traversing movement is stopped, the value set for the traversing speed or the traversing movement remains preselected and that when the hand (6) of the machine operator (5) is moved into the second sensor region (20) again, the drive unit is moved with the preset value for the traversing movement or the traversing speed.

24. The method according to claim 22, **characterized in that** after the traversing movement is stopped, the value set for the traversing speed or the traversing movement is set to zero and a new traversing movement is to be started by previously determining the traversing movement and the traversing movement.

25. The method according to one of claims 13 to 24, **characterized in that** by pushing a push button (9) twice, a main menu is displayed on the display (8) and is accessible for further commands.

26. The method according to one of claims 13 to 25, **characterized in that** by pushing a push button (9) once, a predefinable submenu, in particular a menu for choosing a traversing movement of a drive unit of the electrically controlled machine (2), is displayed on the display (8) and is accessible for further commands.

27. The method according to one of claims 13 to 26, **characterized in that** by holding down a push button (9), several error messages may be acknowledged at the same time.

28. The method according to one of claims 13 to 27, **characterized in that** for navigating between different hierarchy levels of submenus, the rotating wheel (10) of an operating element (4) is gripped in the gripping region (19) and navigating between different submenu levels may be carried out by turning the rotating wheel (10).

## Revendications

1. Élément de commande (4) pour une machine contrôlée électriquement (2), avec un corps d'élément de commande (7) et une molette (10) pour l'entrée d'un ordre dans une commande (3) de la machine (2), dans lequel la machine (10) est disposée de manière autour d'un axe de rotation (11) sur le corps d'élément de commande (7) et l'axe de rotation (11) est entouré d'une surface d'enveloppe (12) sur laquelle la molette (10) peut être saisie et tournée par un opérateur de la machine (5), dans lequel, sur la surface d'enveloppe (12) de la molette (10), est réalisée une première zone de capteur (17) qui est détectée par au moins un premier élément de capteur (18), ce premier élément de capteur (18) permet de détecter un contact de la première zone de capteur (17) avec l'opérateur de la machine (5),
**caractérisé en ce que**
sur la surface d'enveloppe (12) de la molette (10), est réalisée une zone de préhension (19) distante axialement de la première zone de capteur (17), dans laquelle, dans la zone de préhension (19) de la molette (10), aucun élément de capteur n'est présent,
et la première zone de capteur (17) est disposée plus près du corps d'élément de commande (7) que la zone de préhension (19).

2. Élément de commande selon la revendication 1, **caractérisé en ce que** la première zone de capteur (17) et la zone de préhension (19) sont réalisées de manière distante axialement entre elles, dans lequel la première zone de capteur (17) est réalisée sur la circonférence sur la surface d'enveloppe (12) de la molette (10).

3. Élément de commande selon la revendication 1 ou 2, **caractérisé en ce que**, sur la surface d'enveloppe (12) de la molette (10), est réalisée une deuxième zone de capteur (20) sur laquelle est disposé au moins un deuxième élément de capteur (21), dans lequel la première zone de capteur (17) et la deuxième zone de capteur (20) sont disposées de manière distante axialement entre elles sur la molette (10).

4. Élément de commande selon la revendication 2 ou 3, **caractérisé en ce que** la deuxième zone de capteur (20) est disposée plus près du corps d'élément de commande (7) que la première zone de capteur (17).

5. Élément de commande selon l'une des revendications précédentes, **caractérisé en ce que** la surface d'enveloppe (12) de la molette (10) présente un épaulement (14), dans lequel plus particulièrement la première zone de capteur (17) ou la deuxième zone de capteur (20) sont disposées sur une face frontale (15) sur l'épaulement (14).

6. Élément de commande selon la revendication 5, **caractérisé en ce que** la première zone de capteur (17) ou la deuxième zone de capteur (20) s'étend de la face frontale (15) de l'épaulement (14) vers une partie circonférentielle (16) de l'épaulement (14).

7. Élément de commande selon la revendication 5, **caractérisé en ce que**, dans une partie circonférentielle (16) de l'épaulement (14), est réalisée une troisième zone de capteur (22) avec au moins un troisième élément de capteur (23).

8. Élément de commande selon l'une des revendications précédentes, **caractérisé en ce que** la molette (10) est réalisée, au niveau de contour de base, de manière symétrique en rotation, plus particulièrement cylindrique et présente un diamètre (13) entre 20 mm et 80 mm, plus particulièrement entre 35 mm et 60 mm, de préférence entre 40 mm et 50 mm.

9. Élément de commande selon l'une des revendications précédentes, **caractérisé en ce que** le ou les éléments de capteur (18, 21, 23) sont conçus comme des capteurs capacitifs.

10. Élément de commande selon l'une des revendications 1 à 8, **caractérisé en ce que** le ou les éléments de capteur (18, 21, 23) sont réalisés par une mesure de conductivité.

11. Élément de commande selon l'une des revendications précédentes, **caractérisé en ce que** le ou les éléments de capteur (18, 21, 23) sont conçus de façon à être sensibles à la pression et de façon à pouvoir détecter la valeur d'une force d'une main (6) de l'opérateur de la machine (5).

12. Élément de commande selon l'une des revendications précédentes, **caractérisé en ce que**, sur le corps d'élément de commande (7) sont disposés un écran d'affichage (8) et un bouton-poussoir (9).

13. Procédé d'entrée d'un ordre dans la commande (3) de la machine contrôlée électriquement (2) à l'aide d'un élément de commande (4) avec un corps d'élément de commande (7) et une molette (10) disposée sur le corps d'élément de commande (7) de manière rotative par rapport à un axe de rotation (11), dans lequel la molette (10) comprend une zone de préhension (19) sans éléments de capteur (18, 21, 23) et au moins une zone de capteur (17, 20, 22) distante axialement de celle-ci, plus particulièrement à l'aide d'un élément de commande (4) selon l'une des revendications précédentes, le procédé comprenant les étapes suivantes :
- saisie de la molette (10) de l'élément de commande (4) dans la zone de prégension (19) ou dans une des zones de capteur (17, 20, 22) au moyen de la main (6) d'un opérateur de la machine (5) ;
- entrée d'ordres de sélection dans la commande (3) de la machine (2) par rotation de la molette (10) de l'élément de commande (4) par rapport à son axe de rotation (11) ;
- entrée d'ordres de sélection dans la commande (3) de la machine (2) par un déplacement axial de la main (6) de l'opérateur de la machine (5) par rapport à la molette (10), de façon à ce que la main (6) de l'opérateur de la machine (5) glisse d'une des zones de capteur (17, 20, 22) vers une autre zone de capteur (17, 20, 22) ou de la zone de préhension (19) vers une des zones de capteur (17, 20, 22) ou d'une des zones de capteur (17, 20, 22) vers la zone de préhension (19), dans lequel cela est détecté par l'élément de capteur (18, 21, 23) concerné et l'ordre de confirmation est ainsi entré.

14. Procédé selon la revendication 13, **caractérisé en ce que**, pour la navigation entre différentes rubriques du menu, la molette (10) de l'élément de commande (4) est saisie au niveau d'une première zone de capteur (17) et la rotation de la molette (10) permet de naviguer entre les différentes rubriques du menu et un déplacement axial de la main (6) de l'opérateur de la machine (5) de la première zone de capteur (17) vers une deuxième zone de capteur (20) permet d'entrer un ordre de confirmation dans la commande (3) de la machine (2) et de confirmer la rubrique de menu sélectionnée et donc de l'ouvrir.

15. Procédé selon la revendication 13, **caractérisé en ce que**, pour la navigation entre différentes rubriques du menu, la molette (10) de l'élément de commande (4) est saisie au niveau de la deuxième zone de capteur (20) et la rotation de la molette (10) permet de naviguer entre les différentes rubriques du menu et un déplacement axial de la main (6) de l'opérateur de la machine (5) de la deuxième zone de capteur (20) vers la première zone de capteur (17) ou un relâchement de la molette (10) permet d'entrer un ordre de confirmation dans la commande (3) de la machine (2) et de confirmer la rubrique de menu sélectionnée et donc de l'ouvrir.

16. Procédé selon l'une des revendications 13 à 15, **caractérisé en ce que**, pour le réglage d'un paramètre parmi une sélection d'une pluralité de paramètres, la molette (10) de l'élément de commande (4) est saisie au niveau de la première zone de capteur (17) et la rotation de la molette (10) permet de naviguer entre les différents paramètres et un déplacement axial de la main (6) de l'opérateur de la machine (5) de la première zone de capteur (17) vers la deuxième zone de capteur (20) permet d'entrer un ordre de confirmation dans la commande (3) de la machine (2) et le paramètre sélectionné est confirmé et donc ouvert et est rendu éditable, et **en ce que** la main (6) de l'opérateur de la machine (5) est ensuite à nouveau guidée vers la première zone de capteur (17) et la rotation de la molette (10) permet de naviguer entre les différents chiffres du paramètre à régler et un déplacement axial de la main (6) de l'opérateur de la machine (5) de la première zone de capteur (17) vers la deuxième zone de capteur (20) permet à nouveau d'entrer un ordre de confirmation dans la commande (3) de la machine (2) et le chiffre sélectionné peut être réglé, et **en ce que** la main (6) de l'opérateur de la machine (5) est ensuite à nouveau guidée vers la première zone de capteur (17) et la rotation de la molette (10) permet de sélectionner la valeur du chiffre sélectionné et un déplacement axial de la main (6) de l'opérateur de la machine (5) de la première zone de capteur (17) vers la deuxième zone de capteur (20) permet d'entrer à nouveau un ordre de confirmation dans la commande (3) de la machine (2) et de confirmer la valeur sélectionnée du chiffre et de sélectionner un nouveau chiffre.

17. Procédé selon l'une des revendications 13 à 15, **caractérisé en ce que**, pour le réglage d'un paramètre parmi une sélection d'une pluralité de paramètres, la molette (10) de l'élément de commande (4) est saisie au niveau de la première zone de capteur (17) et la rotation de la molette (10) permet de naviguer entre les différents paramètres et un déplacement axial de la main (6) de l'opérateur de la machine (5) de la première zone de capteur (17) vers la deuxième zone de capteur (20) permet d'entrer un ordre de confirmation dans la commande (3) de la machine (2) et le paramètre sélectionné est confirmé et donc ouvert et est rendu éditable, et **en ce qu'**une rotation de la molette (10) en maintenant simultanément la main (6) de l'opérateur de la machine (5) dans la deuxième zone de capteur (20), permet de régler l'ensemble de la valeur du paramètre avec tous ses chiffres et un relâchement de la molette (10) ou un déplacement axial de la main (6) de l'opérateur de la machine (5) de la deuxième zone de capteur (20) vers la première zone de capteur (17) permet de confirmer la valeur du paramètre réglée.

18. Procédé selon l'une des revendications 13 à 17, **caractérisé en ce que**, pour la sélection d'un déplacement d'une unité d'entraînement de la machine contrôlée électriquement (2), la molette (10) de l'élément de commande (4) est saisie au niveau de la première zone de capteur (17) et une rotation de la molette (10) permet de naviguer entre les différentes options de mouvement et un déplacement axial de la main (6) de l'opérateur de la machine (5) de la première zone de capteur (17) vers la deuxième zone de capteur (20) permet d'entrer un ordre de confirmation dans la commande (3) de la machine (2) et de démarrer le déplacement, dans lequel, en option, une rotation de la molette (10) pendant le déplacement permet de faire varier la vitesse de déplacement par la sélection d'une autre option de mouvement.

19. Procédé selon l'une des revendications 13 à 17, **caractérisé en ce que**, pour la sélection d'un déplacement d'une unité d'entraînement de la machine contrôlée électriquement (2), la molette (10) de l'élément de commande (4) est saisie au niveau de la deuxième zone de capteur (20) et une rotation de la molette (10) permet de naviguer entre les différentes options de déplacement, dans lequel, immédiatement après la sélection de l'option de mouvement, un ordre de confirmation est entré dans la commande (3) de la machine (2) et le déplacement est démarré et dans lequel, en option, une rotation de la molette (10) pendant le déplacement permet de faire varier la vitesse de déplacement par la sélection d'une autre option de mouvement.

20. Procédé selon l'une des revendications 13 à 19, **caractérisé en ce que**, pour la sélection d'une vitesse de déplacement d'une unité d'entraînement de la machine contrôlée électriquement (2), la molette (10) de l'élément de commande (4) est saisie au niveau de la première zone de capteur (17) et une rotation de la molette (10) permet de régler, progressivement pour sauts incrémentaux, différentes vitesses de déplacement et un déplacement axial de la main (6) de l'opérateur de la machine (5) de la première zone de capteur (17) vers la deuxième zone de capteur (20) permet d'entrer un ordre de confirmation dans la commande (3) de la machine (2) et de démarrer le déplacement, dans lequel, en option, une rotation de la molette (10) pendant le déplacement permet de faire varier la vitesse du déplacement.

21. Procédé selon l'une des revendications 13 à 19, **caractérisé en ce que**, pour la sélection d'une vitesse de déplacement d'une unité d'entraînement de la machine contrôlée électriquement (2), la molette (10) de l'élément de commande (4) est saisie au niveau de la deuxième zone de capteur (20) et une rotation de la molette (10) permet de régler, progressivement pour sauts incrémentaux, différentes vitesses de déplacement, dans lequel, immédiatement après la sélection de la vitesse de déplacement, un ordre de confirmation est entré dans la commande (3) de la machine (2) et le déplacement est démarré et dans lequel, en option, une rotation de la molette (10) pendant le déplacement permet de faire varier la vitesse du déplacement, de manière progressive ou par sauts incrémentaux.

22. Procédé selon l'une des revendications 18 à 21, **caractérisé en ce que** le retrait de la main (6) de la deuxième zone de capteur (20) ou un relâchement de la molette (10) permet d'arrêter le déplacement.

23. Procédé selon la revendication 22, **caractérisé en ce que**, après l'arrêt du déplacement, la valeur réglée pour la vitesse de déplacement ou le mouvement reste pré-sélectionnée et un nouveau déplacement de la main (6) de l'opérateur de la machine (5) vers la deuxième zone de capteur (20) permet de déplacer l'unité d'entraînement avec la valeur pré-réglée pour le mouvement ou la vitesse de déplacement.

24. Procédé selon la revendication 22, **caractérisé en ce que**, après l'arrêt du déplacement, la valeur réglée pour la vitesse de déplacement ou le déplacement est réglée à zéro et un nouveau déplacement doit être démarré par une détermination préalable du mouvement ou de la vitesse de déplacement.

25. Procédé selon l'une des revendications 13 à 24, **caractérisé en ce qu'**une double pression sur un bouton-poussoir (9) permet d'afficher un menu principal sur l'écran d'affichage (8) et d'accéder à d'autres ordres.

26. Procédé selon l'une des revendications 13 à 25, **caractérisé en ce qu'**une simple pression sur un bouton-poussoir (9) permet d'afficher un sous-menu prédéfini, plus particulièrement un menu pour la sélection d'un mouvement d'une unité d'entraînement de la machine contrôlée électriquement (2), sur l'écran d'affichage (8) et d'accéder à d'autres ordres.

27. Procédé selon l'une des revendications 13 à 26, **caractérisé en ce qu'**une pression prolongée sur un bouton-poussoir (9) permet d'acquitter simultanément plusieurs messages d'erreur.

28. Procédé selon l'une des revendications 13 à 27, **caractérisé en ce que**, pour la navigation entre différents niveaux hiérarchiques des sous-menus, la molette (10) d'un élément de commande (4) est saisie au niveau de la zone de préhension (19) et une rotation de la molette (10) permet de naviguer entre différents niveaux de sous-menus.
